# EUROPÄISCHE PATENTSCHRIFT

(11) **EP 3 090 454 B1**
(45) Veröffentlichungstag und Bekanntmachung des Hinweises auf die Patenterteilung: **14.02.2018**
(21) Anmeldenummer: 14811809.4
(22) Anmeldetag: 04.12.2014
(51) Int. Cl.: H01M 2/08, H01M 2/14, H01M 4/00, H01M 8/18

(54) **ANORDNUNG ELEKTROCHEMISCHER ZELLEN**
ARRANGEMENT OF ELECTROCHEMICAL CELLS
AGENCEMENT DE PILES ÉLECTROCHIMIQUES

(30) Priorität: 06.12.2013 DE 102013225159
(43) Veröffentlichungstag der Anmeldung: 09.11.2016
(73) Patentinhaber: Fraunhofer-Gesellschaft, 80686 München (DE)
(72) Erfinder: BROMBERGER, Kolja Alexander, 79106 Freiburg (DE); SMOLINKA, Tom, 79115 Freiburg (DE); WENT, Joachim, 79100 Freiburg (DE)
(74) Vertreter: Pfenning, Meinig & Partner mbB
(86) Internationale Anmeldenummer: PCT/EP2014/076567
(87) Internationale Veröffentlichungsnummer: WO 2015/082614

(56) Entgegenhaltungen:
- DE-A1-102006 048 860
- DE-A1-102011 017 264
- DE-B3-102009 040 786

## Beschreibung

Die Erfindung betrifft eine Anordnung elektrochemischer Zellen nach dem Oberbegriff des Anspruch 1. Dabei kann es sich um Niedertemperatur-Brennstoffzellen, Elektrolyseuranordnungen und insbesondere um Redox-Flow Batterien handeln, die alle bei einer Betriebstemperatur unterhalb 300 °C betrieben werden.

Die elektrochemischen Wandler Brennstoffzelle, Elektrolyseur oder Redox-Flow Batterie sind in Ihrer prinzipiellen Funktionsweise und in Ihrem Aufbau sehr ähnlich. Bei allen drei Technologien handelt es sich um elektrochemische Zellen, die zwei Reaktionsräume mit an- oder durchströmten Elektroden aufweisen und von einer Membran fluidisch getrennt sind. Die Eduktzu- und Reaktionsproduktabfuhr erfolgt dabei über Kanalstrukturen und unter Verwendung sogenannter Flow-Fields.

Im Folgenden werden die einzelnen Technologien kurz erläutert.

Eine Brennstoffzelle wandelt chemische Energie eines kontinuierlich zugeführten Brennstoffes und eines Oxidationsmittels in elektrische Energie um. Als Brennstoff kann Wasserstoff oder eine organische Verbindung, wie beispielsweise Methan oder Methanol eingesetzt werden. Als Oxidationsmittel wird Sauerstoff eingesetzt. Verbreitet ist die sogenannte Protonenaustauschermembran-Brennstoffzelle. An der Anode wird der Brennstoff katalytisch unter Abgabe von Elektronen zu Protonen oxidiert. Über die Ionen-Austausch Membrane gelangen die Protonen in den Kathodenraum. Die Elektroden werden über eine elektrische Last von der Anode zur Kathode geführt. An der Kathode wird das Oxidationsmittel durch Aufnahme der Elektronen zu Anionen reduziert, die direkt mit den Protonen zu Wasser reagieren. An den Elektroden laufen folgende Reaktionen ab:

| | | | |
|---|---|---|---|
| Anode: | H₂ | → | 2 H⁺ + 2 e⁻ |
| Kathode: | ½ O₂ + 2 H⁺ + 2 e⁻ | → | H₂O |
| Gesamtzellreaktion: | 2 H₂ + O₂ | → | 2 H₂O |

Bei Niedertemperatur-Protonenaustauschmembran-Brennstoffzellen werden Bipolarplatten mit eingefrästen Gaskanalstruktur eingesetzt, die an die Gasdiffusionsschichten angrenzen. Über die Kanalstruktur werden einerseits die Edukte (Brennstoff und Oxidationsmittel) flächig an die Elektrode herangeführt und andererseits die Reaktionsprodukte aus der Zelle herausgeführt. Daneben wird über eine Bipolarplatte die elektrische Konnektivität zwischen zwei benachbarten Zellen hergestellt. Die an der Anode frei werdenden Elektronen einer ersten Zelle wandern durch die Gasdiffusionsschicht zur Bipolarplatte und gelangen von dort auf die Kathodenseite einer zweiten Zelle. Die Elektronen wandern über die Gasdiffusionsschicht zur Kathode. Die in der Brennstoffzelle ablaufende Reaktion ist mit einer Wärmeentwicklung verbunden. Diese Wärme muss abgeführt werden. Bei leistungsfähigen Systemen werden dazu die Bipolarplatten zusätzlich von Kühlwasser durchströmt. Bipolarplatten bestehen üblicherweise aus Graphit, benutzt werden aber auch korrosionsfester Stahl, Kohlefaserkomposite, Graphitkunststoffkomposite, Titan und Zirkonium.

Bei der Elektrolyse wird durch einen elektrischen Strom eine Redoxreaktion erzwungen. Zwei Elektroden werden in einen Elektrolyten getaucht und an eine Gleichspannungsquelle angeschlossen. Legt man eine genügend große Gleichspannung an, kommt es an den Elektroden zu getrennten Redoxreaktionen, bei denen ein Elektrolytbestandteil Elektronen an die positiv geladene Anode abgibt, während ein anderer an der negativ geladene Kathode Elektronen aufnimmt. Im Elektrolyten wird der Stromkreis elektrochemisch durch die Wanderung der Anionen (OH-) bzw. der Kationen (H+) zu den Elektroden geschlossen. Als Edukt wird bei einer Elektrolyse häufig Wasser eingesetzt.

Es ergeben sich folgende Elektrodenreaktionen:

| | | | |
|---|---|---|---|
| Kathode: | 2 H⁺ + 2 e⁻ | → | H₂ |
| Anode: | H₂O | → | 0,5 O₂ + 2 H⁺ + 2 e⁻ |
| Gesamtzellreaktion: | H₂O | → | H⁺ + 0,5 O₂ |

Damit es dabei zu keiner Vermischung der Elektrolyseprodukte Wasserstoff und Sauerstoff kommt, sind Anoden- und Kathodenraum in der Regel durch ein gasdichtes Diaphragma, in der Regel eine Membran, getrennt, das von Ionen jedoch passiert werden kann. Die Elektroden bestehen aus porösen Edelmetallen und dienen gleichzeitig als Katalysator. Hierbei können beispielsweise auf der Anodenseite Iridium und auf der Kathodenseite Platin verwendet werden. Die Elektroden werden mit der Membran zu einer Membran-Elektrodeneinheit (MEA) verpresst. Poröse Stromableiter aus leitfähigem Material verteilen den elektrischen Strom und das für die Reaktion benötigte Wasser auf die Elektrodenfläche. Gleichzeitig ermöglichen sie den Abtransport der Elektrolyseprodukte Wasserstoff und Sauerstoff über Kanalstrukturen.

Redox-Flow Batterien, allgemein auch Flussbatterien genannt zählen zu den elektrochemischen Energiespeichern. Sie speichern die Energie außerhalb des elektrochemischen Konverters, im Nachfolgenden als Stack bezeichnet, in Elektrolyttanks und arbeiten im Niedertemperaturbereich. Im Gegensatz zu konventionellen Akkumulatoren, bei denen Elektrode und Elektrolyt eine feste Einheit darstellen, sind bei einer Redox-Flow Batterie der Leistungsteil und die Kapazität, also der Speicherteil, entkoppelt. Zu- oder abgeführte elektrische Energie führt im Stack zur Änderung der Oxidationsstufe von gelösten Ionen und damit zu einer Änderung des chemischen Energieinhalts dieser Ionen. Im einfachsten Falle besteht ein Stack aus einer einzelnen Zelle aus zwei porösen Durchflusselektroden, einer lonentauschermembran und zwei Stromsammlern. Die beiden Elektroden einer Zelle werden von zwei Elektrolytlösungen (Edukte) mit verschiedenen Redoxpaaren durchströmt. Zwischen den beiden Elektroden ist eine ionendurchlässige Membran angeordnet, die für die beiden Elektrolyten dicht ist. In einer Halbzelle findet eine Oxidation der in dem jeweiligen Elektrolyt gelösten lonenspezies statt, wobei Elektronen frei werden, die über die Stromsammler und Quelle/Last zur anderen Halbzelle der jeweiligen elektrochemischen Zelle geleitet werden und dadurch einen elektrischen Gleichstrom erzeugen. In der anderen Halbzelle findet eine Reduktion der dortigen Ionen statt. Der Stromkreis wird über Anionen oder Kation (H+) geschlossen, die die Membran durchwandern können. Je nach Stromrichtung wird die Batterie dabei geladen oder entladen. Die elektrische Zellspannung hängt von der Differenz der Redoxpotentiale der eingesetzten Ionen in den beiden unterschiedlichen Elektrolyten ab. Für das Beispiel einer Vanadium-Redox-Flow Batterie ergeben sich folgende Elektrodenreaktionen:

| | | | |
|---|---|---|---|
| Negative Halbzelle: | V³⁺ + e⁻ | ↔ | V²⁺ |
| Positive Halbzelle: | VO²⁺ + H₂O | ↔ | VO₂⁺ + 2 H⁺ + e⁻ |
| Gesamtzellreaktion: | V³⁺ + VO²⁺ + H₂O | ↔ | V²⁺ + VO₂⁺ + 2 H⁺ |

Die Elektrode nimmt hierbei nicht an der Reaktion teil, wodurch im Gegensatz zu einem gewöhnlichen Akkumulator keine Leistungseinbußen durch Abnutzung des Elektrodenmaterials auftreten.

Die am weitesten verbreitete Redox-Flow Batterie ist die Vanadium-Redox-Flow Batterie (VRFB), die in den 1980er Jahren in ihren Grundzügen entwickelt wurde. Andere Redoxpaar-Kombinationen wie Zink/Bromid, PSB-Polysulfid/Bromid und Zink/Cer weisen individuelle Nachteile auf und spielen eine eher untergeordnete Rolle. Bei der VRFB wird die Tatsache ausgenutzt, dass Vanadium vier stabile Ionen (zwei Redoxpaare) besitzt und daher nur ein einziges Element für den Betrieb der Batterie notwendig ist. Damit tritt auch bei einer unbeabsichtigten Vermischung der beiden Elektrolytkreisläufe kein irreversibler Schaden auf, und es ist lediglich die gespeicherte Energie verloren, nicht jedoch der gesamte Elektrolyt. Eine Vermischung ist durch Diffusion über die Membran immer vorhanden, weshalb dies einen sehr wichtigen Vorteil gegenüber anderen Typen von Redox-Flow-Batterien, wie zum Beispiel Zink-Cerium-Akkumulatoren darstellt. Die Elektrolytflüssigkeit besteht aus einer wässrigen Säure, zumeist H₂SO₄, welche die für den Betrieb notwendigen Protonen liefert und in der die Vanadiumspezies gelöst vorliegen. Auf Grund des relativ einfachen Aufbaus und ihres heute noch hohen Innovationspotenzials stellen Redox-Flow Batterien Energiespeicher im MWh-Bereich mit potenziell sehr geringen Speicherkosten dar.

Während die technische Machbarkeit dieser Technologien nachgewiesen ist, stellen vorrangig die aktuell noch zu hohen System- bzw. Speicherkosten eine Markteintrittsbarriere dar und hemmen so eine weitere Marktdurchdringung. Ein wesentlicher Kostenanteil entfällt hierbei auf die Herstellungskosten der elektrochemischen Wandler mit heutigen Zell- und Stackkonzepten.

Grundsätzlich ist neben dem Einsatz der Funktionsmaterialien für die bei der Erfindung nutzbaren elektrochemischen Zelltypen, wie Elektroden, Membrane und Bipolarplatten ein hoher Materialeinsatz insbesondere durch Rahmen- und Dichtmaterialien erforderlich. Rahmenteile nach dem Stand der Technik werden mittels zerspanenden Fertigungsverfahren oder Warmformverfahren, wie z.B. Spritzguss hergestellt. Dies erfordert einen hohen Fertigungsaufwand der Rahmenteile. Wie weiter unten beschrieben, müssen diese Rahmenteile verschiedene Funktionen aufweisen. Eine wesentliche Funktion ist, neben der Aufnahme der Funktionsmaterialien, die Aufnahme von Dichtmaterialien. Nach dem Stand der Technik werden O-Ringe, Rundschnüre, Flachdichtungen oder dispenste Dichtungen eingesetzt. Diese Rahmenkonzepte und Dichtungsmethoden sind für eine Massenproduktion ungeeignet, da sie nicht nur einen hohen Materialeinsatz erfordern, sondern auch einen hohen Fertigungs- und Montageaufwand nach sich ziehen. Für eine Optimierung der Leistungsdichte und einer Reduzierung der spezifischen Kosten bei der Auslegung elektrochemischer Wandler ist es notwendig eine für den Auslegungsfall angepasste Elektrodendicke zu realisieren. Die Umsetzung sehr dünner Elektroden ist durch den Einsatz von Rahmenteilen nach dem Stand der Technik limitiert, da diese eine Mindestdicke aufweisen müssen, um die volle Funktionalität (siehe unten) aufzuweisen.

Am Beispiel der Vanadium-Redox-Flow Batterie sollen die erforderlichen Funktionen der Rahmenkonzepte nach dem Stand der Technik nachfolgend konkreter dargelegt werden. Diese können analog auf andere elektrochemische Zelltypen übertragen werden.

Üblicherweise werden bipolare Zellstapel in Filterpressenbauweise genutzt. Die Zellrahmen in Redox-Flow Batterien bestehen in der Regel aus zwei aufeinander liegenden Halbzellen, wobei jede Halbzelle aus je einem Rahmen gebildet wird. Dieser Rahmen weist eine Öffnung auf, in der die jeweilige Elektrode platziert wird. Eine Membran trennt die beiden Halbzellen. Die Elektroden werden jeweils von einer Elektrolytfüssigkeit durchströmt, wobei durch elektrochemische Vorgänge elektrischer Strom erhalten wird, der über elektrische Anschlüsse an den Endplatten des Stacks abgegriffen werden kann. Bei Vanadium-Redox-Flow Batterien sind die Elektrolytflüssigkeiten weitgehend ähnlich, sie weisen nur einen anderen Oxidationszustand auf (V²⁺ und V³⁺, VO₂⁺ und VO²⁺). Die Anströmung der Elektroden erfolgt über Kanäle in den Rahmenteilen, die in Zu- und Ablauföffnungen in jeweils einem Sammelkanal münden. Am Ende der Sammelkanäle sind Anschlüsse vorhanden, die eine Zu- und Abführung der Elektrolytflüssigkeiten in und aus den Zellstapeln ermöglichen. Die Einzelzellen werden mittels bipolaren Platten (kurz: BPP) fluidisch getrennt und elektrisch leitend miteinander verbunden. Damit sind die Einzelzellen elektrisch in Reihe geschaltet, um hohe elektrische Spannungsniveaus zu erreichen. Fluidisch werden die Einzelzellen parallel verschaltet. Der Zellstapel wird mittels Druckplatten, Gewindestangen, Muttern, Unterlegscheiben und Federn mechanisch verspannt.

Sollen die erforderlichen Funktionen in einem Rahmenkonzept erfüllt werden oder wird ein zerspanendes oder Warmformverfahren zur Herstellung eingesetzt, ergeben sich zwangsläufig Limitierungen in der Ausgestaltung der Dicke einer Einzelzelle. Die Mindestdicke eines eingesetzten Rahmens nach dem Stand der Technik liegt bei ca. 3 mm. Dabei treten üblicherweise 75% elektrische Spannungsverluste einer Einzelzelle, sogenannte IR-Verluste auf. Diese werden neben den ionischen bzw. elektrischen Leitfähigkeiten im Wesentlichen durch die Dicke der an- bzw. durchströmten Elektrode bestimmt. Des Weiteren ist ein solcher Rahmen hinsichtlich des Materialeinsatzes, des Fertigungs- und Montageaufwandes nicht ideal. Problematisch bei Spritzguss und zerspanenden Verfahren, insbesondere bei Zellflächen > 2000 cm² Elektrodenfläche, ist die Einhaltung von Dickentoleranzen sowie der Planparallelität. Ein nachgelagertes Fügeverfahren zur Integration der bipolaren Platte und der Membrane in den Rahmen erfordert zusätzlich einen hohen Fertigungsaufwand. Zur Realisierung großer Flächenmaße jenseits von 2000 cm² ist es erforderlich die Strömungsverteilung der Elektrolyte auf Zellebene im Besonderen zu beachten. Daneben gilt es so genannte Nebenschlussströme (engl.: Shunt-Currents) durch eine geeignete Kanalführung zu minimieren. Ziel ist hierbei die Kanallänge und den Kanalquerschnitt so abzustimmen, dass einerseits der ionische Widerstand zwischen zwei Halbzellen möglichst maximal wird und andererseits die Druckverluste in den Kanälen minimiert werden. Der Einsatz von lose eingelegten Dichtelementen bei hoher Zellanzahl ist teuer, aufwendig und erfordert in der Regel einen hohen Montageaufwand, da ein Verrutschen bzw. Herausfallen der Dichtelemente vermieden werden sollte.

Ein effektives Up-Scaling der Leistung von Redox-Flow Batterien geht mit der Vergrößerung der Elektrodenfläche einher. Gleichzeitig sollte eine gleichmäßige Elektrolytverteilung an den Oberflächen der Elektroden sichergestellt sein, um Zellwiderstände zu minimieren und Leistungsdichten zu maximieren. Dies gilt insbesondere bei hohen Ladestromdichten im oberen SOC-Bereich (Ladezustand, engl.: State Of Charge) und hohen Entladestromdichten im unteren SOC-Bereich, da hier der Elektrolytdurchfluss entsprechend hoch sein muss. Gleichzeitig soll der Druckverlust über den gesamten Betriebsbereich über den Stack möglichst klein gehalten werden, um die notwendige Energie für die Pumpantriebe zu minimieren. Die Elektrodenfläche kann bei konstanter volumenspezifischer Oberfläche [m²/m³] des Elektrodenmaterials durch Erhöhung der Elektrodendicke, der Elektrodenbreite und der Elektrodenhöhe vergrößert werden. Die durchströmte Querschnittsfläche bildet sich aus der Elektrodendicke und -breite. Die durchströmte Länge wird durch die Elektrodenhöhe definiert. In allen Fällen bleibt die hydraulische Permeabilität der jeweiligen Elektrode konstant. Wird die Elektrodenhöhe vergrößert, steigt die erforderliche Pumpenergie an, da der Elektrolyt einen längeren Weg durch die Elektrode zurücklegen muss. Hinzu kommt bei senkrechter Durchströmung von unten nach oben ein zusätzlicher hydrostatischer Druck. Wird dagegen die Elektrodenbreite vergrößert, verschlechtert sich in der Regel die Elektrolytverteilung über die Elektrodenbreite. Dies gilt im Besonderen bei hohen Stromdichten und damit hohen Elektrolytdurchflüssen und einem breiten SOC-Bereich. Durch eine inhomogene Durchströmung der Elektrode erhöht sich der Zellwiderstand und damit sinkt der energetische Wirkungsgrad. Wird die Elektrodendicke vergrößert, erhöhen sich zwangsläufig die IR-Verluste. Damit sinkt ebenfalls der Energetische Wirkungsgrad. In allen Fällen sinkt damit der Systemwirkungsgrad.

Eine weitere Möglichkeit die Elektrodenfläche zu erhöhen, besteht in der Vergrößerung der volumenspezifischen Oberfläche [m²/m³]. Dies kann generell durch eine geeignete Auswahl des Elektrodenmaterials, eine Zugabe oberflächenvergrößernder Partikel auf die Elektrode, eine thermische, chemische oder elektrochemische Aktivierung des Elektrodenmaterials oder die Kompression der Elektrode erreicht werden. Während die ersten drei Punkte materialspezifisch und damit unabhängig des Zelldesigns sind, muss bei einer Elektrodenkompression das Zelldesign hierauf abgestimmt sein. Bei der Kompression der Elektrode sinken die Elektrodendicke und die hydraulische Permeabilität sowie der elektrische Kontaktwiderstand zur BPP. Die elektrische Leitfähigkeit steigt dabei. In Folge sinken die IR-Verluste und der Druckverlust steigt bei gleichem Elektrolytdurchfluss.

Für große Elektrodenflächen sollte es deshalb Ziel sein, neben der Elektrodenhöhe und -breite auch die Elektrodendicke und die Elektrodenkompression zu optimieren. Für große elektrische Stromdichten ist es weiterhin wünschenswert möglichst dünne Elektroden mit hoher volumenspezifischer Reaktionsoberfläche, hoher Aktivität für die Hauptreaktionen und hoher hydraulischer Permeabilität einzusetzen, um einerseits die Überspannungen und andererseits die Druckverluste zu minimieren. Eine Steigerung der Aktivität wird in der Regel durch eine thermische, chemische oder elektrochemische Vorbehandlung des Elektrodenmaterials erreicht, um funktionelle Gruppen auf der Elektrodenfläche aufzubringen. Das Zelldesign sollte solche Elektroden aufnehmen können und eine homogene Anströmung garantieren. Darüber hinaus sollte das Zelldesign eine Entkoppelung der hydraulischen Permeabilität der Elektrode und dem Druckverlust über die Zelle ermöglichen. Dies ist gerade vor dem Hintergrund einer sehr guten Elektrolytverteilung über die gesamte Elektrodenoberfläche ein wichtiger Aspekt. Neben der bekannten durchströmten 3D-Elektrode bieten sich sogenannte Flow-Fields an, wie sie aus Brennstoffzellenanwendungen bekannt sind. Diese Flow-Fields erlauben eine gezielte Führung der Elektrolyten entlang einer Elektrode, wodurch eine Gleichverteilung des Elektrolyten über die Elektrodenoberfläche und damit eine hohe Ausnutzung der Elektrode erreicht werden kann. Das Flow-Field ist dabei typischerweise in eine bipolare Platte eingebracht. Zur Abbildung großer Elektrodenflächen ist es erforderlich, solche Fluidführungen nicht in der bipolaren Platte zu realisieren, sondern von dieser möglichst unabhängig zu gestalten, da diese sonst eine Mindestdicke aufweisen muss, um eine hinreichende mechanische Stabilität aufzuweisen. Der elektrische Widerstand und der erforderliche Materialeinsatz steigen dadurch an. Weiterhin werden auch für solche Flow-Fields meist Graphit-Kunststoff-Komposite mittels Heißpressen oder Spritzguss oder zerspanenden Verfahren eingesetzt.

DE 10 2006 048 860 A1 betrifft ein Brennstoffzellenmodul und dessen Verwendung.

Aus DE 10 2009 040 786 B3 ist ein Gasverteiler zum passiven Wasseraustrag und eine Polymerbrennstoffzelle bekannt.

In DE 10 2011 017 264 A1 ist eine Möglichkeit zum Einbau einer Gas-Diffusions-Elektrode in eine elektrochemische Zelle beschrieben.

Die Offenbarung von DE 10 2013 205 473 A1 betrifft teilweise fluorierte Polyolefine, die bei Brennstoffzellen eingesetzt werden können.

Es ist daher Aufgabe der Erfindung, ein neuartiges Zell- und Stackdesign für elektrochemische Wandler/Zellanordnungen, ganz besonders Redox-Flow Batterien bereitzustellen, das kostengünstiger und einfacher herstellbar ist und mit dem höhere Leistungsdichten sowie ein erhöhter Wirkungsgrad erreichbar sind.

Erfindungsgemäß wird diese Aufgabe mit einer Anordnung elektrochemischer Zellen, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der Erfindung ist es besonders vorteilhaft, dass ein rahmenloses Zell- und Stackkonzept (mehrere gestapelt übereinander angeordnete elektrochemische Zellen, die bevorzugt elektrisch leitend und hydraulisch miteinander verbunden sind) zur Verfügung gestellt werden kann, das ohne einen Rahmen oder Rahmenelemente nach dem Stand der Technik funktionsfähig ist.

Das vorgeschlagene Zell- und Stackkonzept bietet die Möglichkeit, große Elektrodenflächen für hohe elektrische Stromdichten und Eduktdurchsätze, bei gleichzeitig geringen elektrischen Zellwiderständen und Druckverlusten zu realisieren. Der Gesamtwirkungsgrad kann hierdurch gegenüber Konzepten nach dem Stand der Technik deutlich gesteigert werden.

Auslegungstechnisch bietet das vorgestellte Konzept neue Freiheitsgrade, da zum einen die Elektrodendicke und -verpressung variabel und unabhängig von einem Rahmenteil definiert werden können und zum anderen der Druckverlust durch definierte Strömungswege von Edukten in der jeweiligen Halbzelle einer elektrochemischen Zelle von der Permeabilität der Elektrode entkoppelt werden kann. Damit ist eine Minimierung der IR-Verluste bei gleichzeitiger Minimierung des Druckverlustes und Strömungswiderstandes möglich.

Des Weiteren kann durch die Einbringung von Kanalstrukturen die Konzentrationsverteilung der Edukte über große Elektrodenflächen deutlich erhöht werden, was die Durchtrittsstromdichteverteilung über die Elektrodenoberfläche und damit die elektrische Stromdichteverteilung innerhalb der Elektrode vergleichmässigt und damit die Konzentrationspolarisation in der/den elektrochemischen Zelle(n) verringert. Damit ist es möglich, die elektrischen Spannungsverluste, sowie die erforderliche Pumpen- oder Verdichterenergie für die Eduktversorgung deutlich zu reduzieren.

Durch eine geeignete Ausgestaltung der Strömungskanäle können durch das vorgeschlagene Zellkonzept bei Einsatz ionisch leitfähiger Edukte, die sogenannten Shunt-Currents minimiert werden, die sich negativ auf den energetischen Wirkungsgrad auswirken.

Insgesamt kann damit nicht nur der energetische Wirkungsgrad der Anordnung elektrochemischer Zellen, sondern auch der Systemwirkungsgrad gesteigert werden.

Mit der Erfindung können damit nachfolgende Effekte erreicht werden.
1. Geringe Herstellkosten durch Verringerung des Materialeinsatzes und des Fertigungs- und Montageaufwand durch Verzicht eines Rahmens nach dem Stand der Technik.
2. Hohe erreichbare Leistungs- und Stromdichten durch reduzierte Zellwiderstände durch Minimierung der IR-Verluste durch optimierte Elektrodendicke und Elektrodenkompression.
3. Entkoppelung der Permeabilität der Elektrode und dem Druckverlust über die Zelle durch zusätzlich frei definierbare Strömungsbereiche zwischen Separator oder Membrane und Elektrode.
4. Homogenisierung der Elektrolytkonzentration über die gesamte Elektrodenfläche durch den Einsatz von bipolar Platten unabhängigen Flow-Fields bzw. Strömungsverteilerstrukturen und hierdurch eine Reduktion der Spannungsverluste durch Konzentrationspolarisation.
5. Variable Integration der Funktionsmaterialien Separator oder Membrane, bipolare Platte bzw. Folie und Elektrode
   a. Integration bipolarer Platten, bzw. bipolaren Folien nach dem Stand der Technik
   b. Integration neuartiger bipolarer Platten, bzw. bipolaren Folien
   c. Integration von Elektroden nach dem Stand der Technik
   d. Integration neuartiger Elektroden
   e. Integration von Separator oder Membrane nach dem Stand der Technik
   f. Integration neuartiger Separatoren oder Membrane.
6. Homogene Strömungsverteilung der Edukte auf Einzelzellen und innerhalb einer Zeller entlang der Elektrodenbreite über einen weiten Volumenstrom-Regelbereich der Eduktversorgung/Bereitstellung auslegungstechnischer Freiheitsgrade hinsichtlich
   a. der elektrischen Spezifikationen (Leistungs-, Strom-, Spannungsbereich, Nennkapazität)
   b. der fluidischen Spezifikation (Durchfluss, Druckverlust, Eduktverteilung auf Einzelzellen und entlang der Elektrodenbreite je Zelle).
7. Geeignet für hohe Standzeiten und hohe Zyklenfestigkeit.

In der Anwendung der Erfindung für Redox-Flow Batterien sollten weitere Effekte, die nachfolgend angeführt sind, erreicht werden können.
8. Geeignet für hohe Zellflächen zwischen 500 bis 50.000 cm².
9. Geeignet für hohe Stromdichten zwischen 50 bis 1000 mA/cm².
10. Geeignet für hohe energetische Wirkungsgrade bei hohen Stromdichten.
11. Geeignet für hohen Ausnutzungsgrad der theoretischen Kapazität bei hohen Stromdichten

Die Erfindung basiert auf einem dünnen flächigen Gebilde, welches mit verschiedenen Funktionen versehen werden kann. Hierbei können alle aus dem Stand der Technik bekannten Funktionen der Rahmen und Funktionsmaterialien, wie Separator oder Membran, Elektroden, bipolare Platten oder Folien mittels eines solchen flächigen Gebildes ausgebildet werden. Vorteilhaft ist, dass Funktionen, die bislang den einzelnen Komponenten zuzuschreiben waren auf oder an einem flächigen Gebilde einzeln definiert werden können. Hierdurch vereinfacht sich der gesamte Stackaufbau. Ein weiterer Vorteil der Erfindung ist die generelle Anwendung auf verschiede elektrochemische Zelltypen/Wandler wie beispielsweise Brennstoffzellen, Elektrolyseure und Redox-Flow Batterien.

Bei dem flächigen Gebilde kann es sich um Rollenware handeln, die mit Verfahren, wie z.B. Schneiden, Stanzen, CNC-Laserschnitt, Siebdruck, 3D-Druck, Heißpressen oder anderen Verfahren be- und verarbeitet werden kann. Damit ist das Konzept tauglich für eine Massenfertigung. Herstellkosten können durch einen geringeren Materialeinsatz, eine vereinfachte Fertigung der Einzelkomponenten und einen vereinfachten Montageprozess von Zellstapeln erreicht werden.

Bei der Erfindung einsetzbare Edukte können Wasser, Alkohole, wässrige Elektrolyte oder Elektrolyte auf Basis organischer Lösungsmittel oder ionische Flüssigkeiten oder Wasserstoff, flüssige oder gasförmige Kohlenwasserstoffverbindungen, Sauerstoff oder ein Sauerstoff enthaltendes Gasgemisch sein.

Das Grundelement besteht aus einem Flächengebilde, welches ein Gelege, Gestrick, Gewebe, Gewirk, Netz oder eine offenporige Matrix sein kann. Ein solches Grundelement kann aus einer chemischen Verbindung oder einem Material gebildet sein, die/das ausgewählt ist aus Thermoplasten, insbesondere Polyethylen (PE), Polyester (PET),Polypropylen (PP), Polystyrol (PS), Polysulfon (PSU), Polyvinylchlorid (PVC), Fluorkunststoff, insbesondere Ethylen-Chlortrifluorethylen (E-CTFE), Ethylen-Tetrafluorethylen(ETFE), Terafluorethylen-Perfluorpropylen (FEP), Polytetrafluorethylen (PTFE), Polyvinylidenfluorid (PVDF), einem Elastomer, Duroplasten, Kohlenstoff-, Graphit-, Graphen-, Glas-, Aramidfasern, Titan, Platin und Stahl. Es kann auch ein Verbund davon genutzt werden. Der eingesetzte Werkstoff sollte chemisch und elektrochemisch stabil gegenüber den eingesetzten Edukten und Reaktionsprodukten sein.

Ein solches Grundelement sollte so gestaltet und ausgebildet sein, dass eine Füllmasse in Hohlräume eingebracht werden kann. Dabei sollten die Hohlräume zumindest nahezu vollständig ausgefüllt werden können. Dies ist im äußeren Randbereich, der fluiddicht sein soll, besonders wichtig. Soll beispielsweise ein Separator oder eine Membran mit einer Füllmasse ausgebildet werden, sollte auch diese fluiddicht sein, um einen Eduktaustausch zwischen beiden Halbzellen durch den Separator oder diese Membran in den benachbarten Reaktionsraum zu vermeiden. Dies trifft auch für bipolare Platten oder bipolare Folien zu.

Basis der Erfindung ist/sind ein oder mehrere Grundelement(e) (kurz: GE-X), das/die aus einem Flächengebilde mit bevorzugt einer definierten Dicke (d_GE) gebildet ist/sind. Dabei sollten Grundelemente mit einem bevorzugt polymeren, eine Netzstruktur aufweisenden oder porösen Werkstoff gebildet sein. Der äußere Randbereich kann mit einer Füllmasse versehen sein, die fluiddicht ist und in den äußeren Randbereichen eine vorzugsweise stoffschlüssige Verbindung mit mindestens einem neben diesem Grundelement angeordneten weiteren Grundelement gewährleistet. Unter fluiddicht soll dabei die Dichtheit gegenüber Gasen und Flüssigkeiten, insbesondere den jeweiligen Edukten, insbesondere die Elektrolyten, verstanden sein. Die fluiddichte Verbindung im äußeren Randbereich kann dadurch ausschließlich mittels Grundelementen und Füllmasse erreicht werden, so dass kein zusätzliches äußeres Rahmenelement vorhanden und erforderlich ist.

In Grundelementen sind Bereiche mit einer Füllmasse versehen, die einen fluiddichten äußeren Rand bilden. Innerhalb dieses äußeren Randbereiches, sind Bereiche ausgebildet, die keine Füllmasse enthalten und damit durchströmbar für Edukte bleiben und/oder eine Füllmasse enthalten und damit funktionalisiert werden können und/oder die Durchbrechungen ausbilden, in denen Funktionselemente eingebracht sein können.

Allgemein zeichnet sich ein solches Grundelement dadurch aus, dass es in nicht verfüllten Bereichen in der x-y-Ebene und senkrecht zur Ebene (z-Koordinate) fluidisch permeabel für die jeweiligen Edukte und Reaktionsprodukte im Sinne einer Strömung durch einen porösen Körper sein kann. Diese Bereiche dienen als Abstandshalter zwischen Funktionsmaterialien und/oder Funktionselementen und bilden in Kombination mit einer Füllmasse definierte poröse Fließwege und Strömungsbereiche für die Edukte.

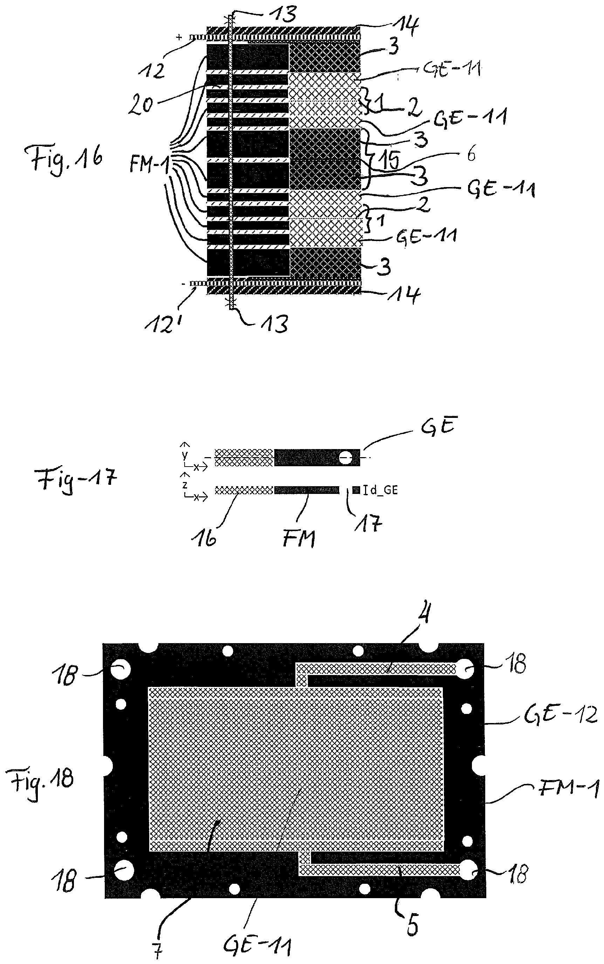

Figur 17 zeigt einen Ausschnitt eines solchen Grundelementes GE in einer Draufsicht und in einem Schnitt mit seiner porösen Struktur 16, eine mit einer Füllmasse verfüllten Bereich sowie einer Durchbrechung 17 in diesem Bereich.

In Verbindung mit einer bevorzugt ersten Füllmasse FM-1 lassen sich so definierte Kanalstrukturen und Strömungsbereiche innerhalb der Ebene des Grundelementes ausbilden. Ein Grundelement mit definierten Strömungswegen ermöglicht die Eduktzu- und Reaktionsproduktabführung aus/in den Sammelkanälen in/aus die/den einzelnen elektrochemischen Zellen und die Verteilung auf die Elektroden. Aufgrund eines inkompressiblen flächigen Gebildes von Grundelementen führen Kräfte durch die Verpressung des Zellstapels nicht zu einer Querschnittsverengung dieser Kanäle. Auf Halbzellenebene können somit kanalartige Strukturen ausgebildet sein, die eine optimierte Eduktverteilung innerhalb oder an der jeweiligen Elektrode oder an dem Separator oder an der Membran ermöglichen, und damit die Konzentrations- und elektrische Stromdichteverteilung in der jeweiligen elektrochemischen Zelle verbessern. Nachfolgend soll nur noch der Begriff Membran genutzt werden, wobei an den entsprechenden Zitaten anstelle Membran auch der Begriff "Separator" genutzt werden könnte.

Auf Halbzellenebene einer elektrochemischen Zelle können Zu- oder Abführungen 4 und 5 für Edukte und Reaktionsprodukte ausgebildet sein, die bezüglich des Druckverlusts und bei Einsatz elektrisch leitfähiger Elektrolyte als Edukte Shunt-Current optimiert sind. Auf Halbzellenebene können auch An- und Abströmbereiche für Edukte und Reaktionsprodukte zu der oder von einer Elektrode 3 ausgebildet werden, die eine optimale Fluidverteilung über die Breite der ionenleitenden Membran 2 bzw. Elektrode 3 erlauben. Auf Halbzellenebene können auch flächige für Edukte und Reaktionsprodukte durchströmbare Bereiche 7 ausgebildet sein, die eine optimierte Strömung entlang der jeweiligen Membran 2 und Elektrode 3 ermöglichen, und damit die Konzentrations- und elektrische Stromdichteverteilung in der elektrochemischen Zelle verbessern. Es ist bekannt, dass die Durchtrittsstromdichte an der Phasengrenze zwischen Elektrode 3 und Edukt/Elektrolyt im Bereich der Membran 2 am höchsten ist. Zur Vergleichmäßigung dieser Durchtrittsstromdichte und einer damit einhergehenden besseren Ausnutzung der Elektrodenoberfläche entlang der Elektrodenhöhe und Elektrodendicke können definierte Strömungswege für Edukt bzw. Elektrolyt genutzt werden. Durch das Fließverhalten des Edukts/Elektrolyten entlang dieser Strömungswege kann die an der Membran 2 vorhandene laminare Grenzschicht verringert werden und eine erhöhte Quervermischung des Edukts/Elektrolyten in Richtung Elektrodendicke (z-Achse) erreicht werden. Hierdurch lässt sich der Ausnutzungsgrad der Elektrode 3 steigern und in Folge kann der elektrische Zellwiderstand verringert werden.

Somit lässt sich ein solches Grundelement durch die Einbringung von Füllmassen spezifisch funktionalisieren, indem Bereiche mit einer Füllmasse versehen werden, um die Funktion einer Dichtung, einer Membran 2, einer Elektrode 3 oder einer bipolaren Platte oder Folie 6 auszubilden.

Eine erste Ausführungsform eines Grundelements GE-11 mit seiner porösen Grundstruktur erfüllt in unverfüllten Bereichen die Funktion eines porösen durchströmbaren Körpers.

Eine zweite Ausführungsform eines Grundelements GE-12 erfüllt in verfüllten Bereichen mit einer ersten Füllmasse 1 FM-1 die Funktion einer Dichtung.

Figur 18 zeigt ein solches Grundelement mit seiner porösen Grundstruktur in Zu-und Abfuhrkanälen 4 und 5 und einem mittigen durchströmbaren Bereich 7, der mit einem Grundelement GE-11 gebildet ist, einem mit einer ersten Füllmasse FM-1 verfüllten Randbereich mit dichtender Wirkung an einem Grundelement GE-12 sowie Durchbrechungen in diesem Bereich.

Eine dritte Ausführungsform eines Grundelements GE-13 erfüllt in verfüllten Bereichen mit einer zweiten Füllmasse FM-2 die Funktion einer integrierten Membran 2.1.

Figur 19 zeigt ein solches Grundelement mit einem verfüllten Randbereich mit einer ersten Füllmasse FM-1 mit dichtender Wirkung sowie einem mit einer zweiten Füllmasse FM-2 verfüllten mittigen Bereich zur Ausbildung einer integrierten Membran 2.1.

Eine vierte Ausführungsform eines Grundelements GE-14 erfüllt in verfüllten Bereichen mit einer dritten Füllmasse FM-3 die Funktion einer integrierten Elektrode 3.1.

Figur 20 zeigt ein solches Grundelement mit einem verfüllten Randbereich mit einer ersten Füllmasse FM-1 mit dichtender Wirkung sowie einem mit einer dritten Füllmasse FM-3 verfüllten mittigen Bereich zur Ausbildung einer integrierten Elektrode 3.1.

Eine fünfte Ausführungsform eines Grundelements GE-15 erfüllt in verfüllten Bereichen mit einer vierten Füllmasse FM-4 die Funktion einer integrierten bipolaren Platte oder bipolaren Folie 6.1.

Figur 21 zeigt ein solches Grundelement GE-15 mit einem verfüllten Randbereich mit einer ersten Füllmasse FM-1 mit dichtender Wirkung sowie einem mit einer vierten Füllmasse FM-4 verfüllten mittigen Bereich zur Ausbildung einer integrierten bipolaren Platte oder Folie 6.1.

Daneben kann ein Grundelement in Bereichen, die mit einer ersten Füllmasse FM-1 verfüllt sind freigeschnittene Bereiche/ Durchbrechungen aufweisen, die die Funktion einer Aufnahme für Funktionsmaterialien, wie Membran 2, durch- oder überströmbare Elektroden 3 sowie bipolare Platten oder Folien/Funktionselemente 6 erfüllt oder in der x-y-Ebene und senkrecht zur Ebene (z-Koordinate) durchlässig gegenüber Gasen und Flüssigkeiten im Sinne einer freien Strömung sind und damit die Funktion einer offene Kanalstruktur erfüllen oder die Funktion einer Positionierungshilfe, oder die Funktion einer Aufnahme für ein Verspannungselement erfüllt werden kann.

Ein Freischnitt / Durchbrechung stellt damit eine Unterbrechung der Struktur des flächigen Gebilde eines Grundelements dar. In diesem Bereich sollte für die Erfüllung einiger Funktionen keine Füllmasse FM-1 bis FM-4 vorhanden sein. Ein oder mehrere Durchbrechung(en)/Freischnitt(e) kann/können durch Stanzen, CNC-Laserschneiden oder andere Verfahren ausgebildet werden.

Eine sechste Ausführungsform eines Grundelements GE-16 erfüllt in freigeschnittenen Bereichen/Durchbrechung(en) die Funktion einer Aufnahme für Funktionsmaterialien.

Somit können in Grundelementen weitere Bereiche mit bevorzugt Durchbrechungen ausgebildet sein, die mit einer dritten oder vierten Füllmasse FM-3 oder FM-4 eine elektrisch leitende Oberflächenstruktur zur Ausbildung von mit Edukt durchströmbaren Elektroden 3 bilden können. Es können auch weitere Durchbrechungen ausgebildet sein, durch die ein poröser elektrischer Leiter zur Ausbildung einer Elektrode ausgebildet oder darin angeordnet ist.

Eine siebte Ausführungsform eines Grundelements GE-17 erfüllt in freigeschnittenen Bereichen/Durchbrechung(en) die Funktion eines freien Strömungsbereiches oder einer Kanalstruktur. Dadurch können definierte Strömungswege für Edukte und Reaktionsprodukte erreicht werden, die mehrere Halbzellen über eine Ausbildung mindestens eines Sammelkanals 18 fluidisch miteinander verschalten/verbinden.

Somit können in Grundelementen weitere Durchbrechungen ausgebildet und angeordnet sein, wobei mindestens eine fluidische Verbindung von einzelnen Halbzellen der Anordnung als Zuführung und mindestens eine fluidische Verbindung von einzelnen Halbzellen als Abführung durch miteinander kommunizierende Durchbrechungen mehrerer Grundelemente ausgebildet sind und damit eine Verteilstruktur gebildet ist, durch die eine gleichmäßige Eduktverteilung innerhalb von einzelnen Halbzellen eines Zellstapels mehrerer übereinander angeordneter elektrochemischer Zellen sowie eine Selbstentleerung eines Fluidpfads und/oder ein Gasaustrag erreichbar ist/sind. Dies ist vorteilhaft, wenn eine Pumpe oder ein Verdichter für die Eduktzufuhr funktionsunfähig wird und der elektrochemische Prozess unterbrochen werden soll.

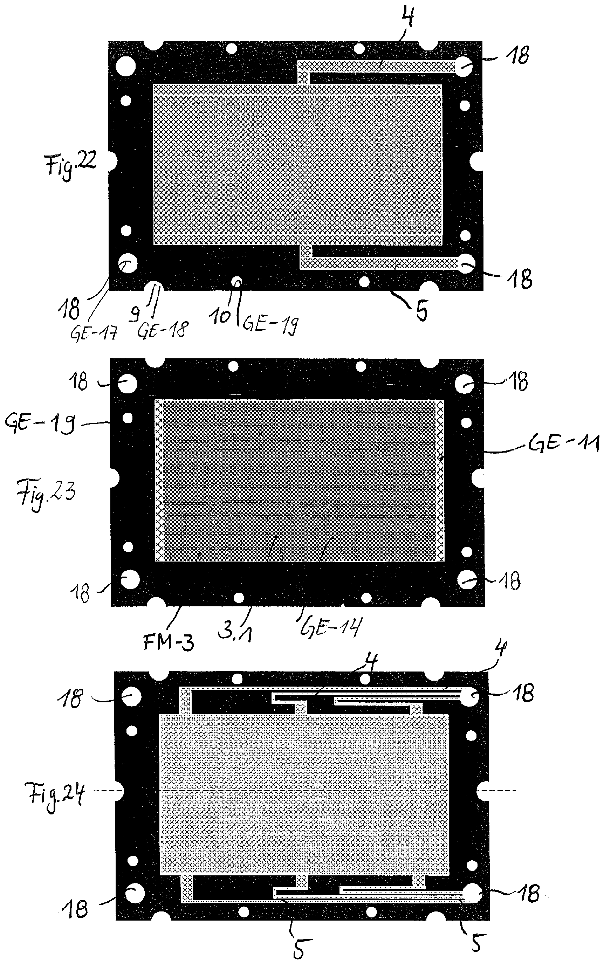

Dies ist in Figur 22 dargestellt. Auf Halbzellenebene ist die Ausgestaltung von Kanälen und Strömungsbereichen entsprechend Grundelement GE-11 analog möglich.

Eine achte Ausführungsform eines Grundelements GE-18 erfüllt in freigeschnittenen Bereichen/Durchbrechung(en) die Funktion einer Positionierungshilfe.

Eine neunte Ausführungsform eines Grundelements GE-19 erfüllt in freigeschnittenen Bereichen/Durchbrechung(en) die Funktion einer Aufnahme für ein Verspannungselement. So können in Grundelementen weitere Durchbrechungen ausgebildet sein, die so ausgebildet und angeordnet sind, dass jeweils ein Element einer Spannanordnung durch miteinander kommunizierende Durchbrechungen geführt ist und mit den Elementen einer Spannanordnung mehrere elektrochemische Zellen stoff-, kraft- und formschlüssig miteinander verbunden werden können. So können beispielsweise solche Durchbrechungen im äußeren Randbereich ausgebildet sein und Spannstäbe hindurch geführt sein, die mit plattenförmigen Elementen die Spannanordnung bilden können. Die plattenförmigen Elemente können bei mehreren gestapelten elektrochemischen Zellen auf den Stirnflächen eines solchen Stapels aufliegen, so dass mittels der Spannstäbe eine Druckkraft auf die elektrochemischen Zellen wirkt, die die Grundelemente zusammendrücken.

Figur 22 zeigt ein Beispiel für die Ausführungsformen GE-17, GE-18, GE-19 eines Grundelementes.

Ein Grundelement kann eingesetzt werden, um eine Membran, Elektrode oder bipolare Platte bzw. Folie nach dem Stand der Technik aufzunehmen bzw. Dichtungen, neuartige integrierte Membranen, Elektroden, bipolare Platten oder Folien sowie Verbundeinheiten hieraus auszubilden. Eine erste Füllmasse FM-1 kann aus Elastomer, wie Ethylen-Propylen-Terpolymer-Kautschuk (EPDM), Fluor-Polymer (FPM/FKM), Silikon-Kautschuk (SI) oder aus einem Thermoplast oder aus einem nur teilvernetzten Kunststoff bestehen. Sie sollte die offene Struktur des flächigen Gebildes vollständig versiegeln, so dass es fluidisch dicht gegenüber den Edukten und Reaktionsprodukten ist. Sie kann in einer definierten flächigen Geometrie auf das Flächengebilde des jeweiligen Grundelements aufgetragen werden. Über die erste Füllmasse kann eine Dichtwirkung durch Presskontakt, Adhäsion oder Stoffschluss zum flächigen Gebilde des jeweiligen Grundelements, zu anderen Funktionsmaterialien, wie Membran, bipolare Platte oder Folie oder Dichtelemente, oder einem benachbart angeordneten Grundelement erreicht werden. Neben der Dichtfunktion kann die erste Füllmasse bevorzugt eingesetzt werden, um definierte Kanalstrukturen und Strömungsbereiche innerhalb der Ebene des Grundelementes auszubilden. Es kann durch eine Einbringung dieser ersten Füllmasse auch ein gezielter Ausgleich von Höhendifferenzen erreicht werden. Sie kann mittels Rakel, Siebdruck, 3D-Druck, Imprägnieren, Dispensen, Extrudieren, thermisches Schweißen, Ultraschall oder Hochfrequenzschweißen oder andere Verfahren auf das flächigen Gebilde aufgetragen oder auch in Hohlräume eingebracht werden.

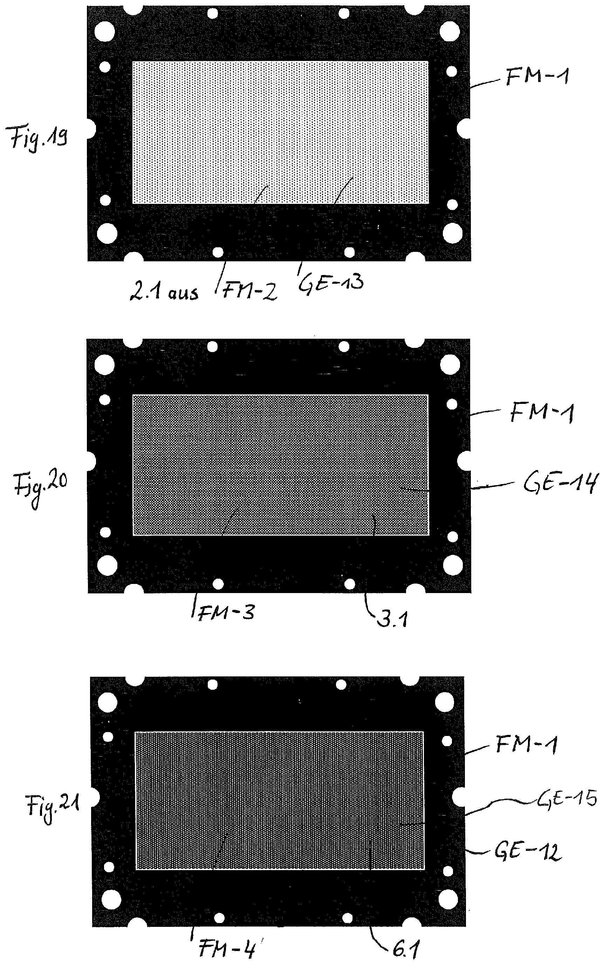

Durch die Einbringung weiterer anderer Füllmassen (kurz: FM-2 bis FM-4) direkt auf oder an das Flächengebilde eines Grundelementes lassen sich neuartige integrierte Membranen, Elektroden und bipolare Platten bzw. Folien herstellen. (siehe hierzu beispielhaft die Figur 19 für eine neuartige integrierte Membran 2.1, Figur 20 für eine neuartige integrierte Elektrode 3.1, Figur 21 für eine neuartige integrierte bipolare Platte oder Folie 6.1).

Wird das Grundelement bereichsweise mit einer zweiten Füllmasse FM-2 flächig definiert, also in bestimmten Bereichen, verfüllt, die ionenleitend, ionenselektiv sowie gas- und flüssigkeitsdicht ist, können diese Bereiche eines Grundelements im Sinne einer semi-permeablen ionenleitenden Membran ausgebildet werden. Bei der erfindungsgemäßen Anordnung elektrochemischer Zellen kann eine zweite Füllmasse für die Ausbildung einer ionenleitenden Membran ausgewählt sein aus Cellulose, Celluloseacetat (CA), Cellulosetriacetat (CTA), Chitin, Cyclodextrin, Polyamid (PA), Polyamidimid (PAI), Polyacrylnitril (PAN), Polybenzimidazol (PBI), Polyester (PES), Polyphenylenoxid (PPO), Polycarbonat (PC), Polyetherimid (PEI), Polyethylenimin (PEI), Polyimid (PI), Polymethylmethacrylat (PMMA), Polypropylen (PP), Polysulfon (PSU), Polyethersulfon (PES), Polyphenylsulfon (PPSU), Polytetrafluorethylen (PTFE), Nafion (sulfoniertes PTFE), Polyvinylidenfluorid (PVDF), Polyetheretherketon (PEEK), sulfonierte Polyetheretherketon (sPEEK), sulfonierte Fluorenylpolyetheretherketone (SFPEEKK), PAES Polyarylethersulfone (PAES), Polyarylenthioether, Polyarylensulfonsäuren, Polyaryletherketone (PAEK), sulfoniertes Polyaryletherketone (sPAEK) fluorierte Polysulfonsäure (PFSA,) Polyvinylpyrrolidon (PVP), Polyvinylalkohol (PVOH), Polydimethylsiloxan (PDMS) und Polyethylenterephthalat (PET), Zeolith, Kohlenstoff, Aluminiumoxid (Al₂O₃), Titandioxid (TiO₂), Zirkonoxid (ZrO₂) und Glas oder einem Gemisch davon. Eine zweite Füllmasse sollte in verfülltem Zustand eine hohe ionische Leitfähigkeit oder Protonenleitfähigkeit, eine hohe Selektivität gegenüber definierten Anionen und Kationen und eine geringe Permeabilität für die Bestandteile der Edukte und Reaktionsprodukte aufweisen. Sie kann in einer definierten flächigen Geometrie auf das flächigen Gebilde eines Grundelements aufgetragen werden, was ebenfalls mittels Rakel, Siebdruck, 3D-Druck, Imprägnieren, Dispensen, Heißpressen oder anderen Verfahren erreicht werden kann. Sie sollte mit dem flächigen Gebilde eine mechanisch stabile, vorzugsweise flexible Struktur aufweisen/bilden. Sie kann mit dem flächigen Gebilde die Funktion einer lonenaustauschmembran erfüllen.

Wird ein Grundelement bereichsweise mit einer dritten Füllmasse FM-3 flächig definiert verfüllt, die porös, elektrisch leitfähig, permeabel für die jeweiligen Edukte, mit einer hohen spezifischen reaktiven Oberfläche und einer hohen elektrochemischen Aktivität für die Hauptreaktionen und in verfülltem Zustand gegen Korrosion stabil ist, kann die Funktion einer Elektrode erreicht werden. Eine dritte Füllmasse kann für die Ausbildung von Elektroden ausgewählt sein aus Gold, Kohlenstoff-, Graphitpartikeln, Kohlenstoff-, Graphitfasern, Fasern auf Cellulose-, Polyacrylnitril-Basis (PAN), carboxy-funktionalisierte CNT (Kohlenstoffnanoröhrchen), MWCNT (mehrwandige Kohlenstoffnanoröhrchen), Graphen, Platin, kohlenstoffgetragene Platinpartikel, Titan, Titan-Oxide, Iridium-, Rutheniumpartikel oder einem Gemisch davon. Sie kann in einer definierten flächigen Geometrie auf das flächige Gebilde eines Grundelements aufgetragen werden, was mittels Rakel, Siebdruck, 3D-Druck, Imprägnieren, Dispensen, Heißpressen oder anderen Verfahren erreicht werden kann. Sie sollte mit dem flächigen Gebilde eine mechanisch stabile, vorzugsweise flexible Struktur aufweisen. Sie kann mit dem entsprechend beschichteten flächigen Gebilde, die Funktion einer Elektrode erfüllen.

Mit einer solchen Füllmasse kann bevorzugt eine Oberflächenstruktur zur Ausbildung von Hohlräumen innerhalb einer elektrochemischen Zelle ausgebildet sein. Damit können beispielsweise Strömungskanäle für Edukt/Elektrolyt ausgebildet werden, so dass dadurch eine optimierte Führung der Edukte/Elektrolyte entlang der Elektrodenoberflächen erreicht werden. Außerdem besteht die Möglichkeit mit einer dritten Füllmasse FM-3 eine Oberflächenstruktur zur Ausbildung von Hohlräumen innerhalb einer elektrochemischen Zelle auszubilden, die von Edukt durchströmbar sind, wodurch eine einfache Ausbildung von Kanälen und Flow-Fields erreichbar ist.

Wird ein Grundelement bereichsweise mit einer vierten Füllmasse FM-4 flächig definiert verfüllt, die gas- und flüssigkeitsdicht gegenüber den Bestandteilen der Edukte und elektrisch leitfähig ist, kann die Funktion einer bipolaren Platte oder Folie erfüllt werden. Eine vierte Füllmasse kann einen oder mehrere polymere(n) und/ oder metallische(n) Bestandteil(e) aufweisen und ist für die Ausbildung von bipolaren Platten ausgewählt aus Gold, Kohlenstoff-, Graphitpartikeln, Kohlenstoff-, Graphitfasern, auf Cellulose-, Polyacrylnitril-Basis (PAN), carboxy-funktionalisierte CNT (Kohlenstoffnanoröhrchen), MWCNT (mehrwandige Kohlenstoffnanoröhrchen), Graphen, Platin, kohlenstoffgetragene Platinpartikel, Titan, Titan-Oxide, Iridium-, Rutheniumpartikel oder einem Gemisch davon. Eine vierte Füllmasse sollte eine hohe elektrische Leitfähigkeit aufweisen und sie in verfülltem Zustand gegen Korrosion stabil sowie flüssigkeits- und diffusionsdicht gegenüber den Bestandteilen von Edukten und Reaktionsprodukten sein. Sie kann mit einer definierten flächigen Geometrie auf das entsprechende flächige Gebilde eines jeweiligen Grundelements aufgetragen werden. Sie kann ebenfalls mittels Rakel, Siebdruck, 3D-Druck, Imprägnieren, Dispensen, Heißpressen oder anderen Verfahren auf das flächige Gebilde aufgetragen werden. Es sollte mit dem jeweiligen flächigen Gebilde ein hydraulisch dichter Verbund gebildet sein sowie eine mechanisch stabile, vorzugsweise flexible Struktur aufweisen.

Eine Füllmasse, die lediglich teilvernetzt ist, kann durch ein thermisches oder anderes Verfahren nachvernetzt werden. Dadurch kann eine Materialverbindung durch Adhäsion oder Stoffschluss zum flächigen Gebilde, zu Funktionsmaterialien, Funktionselementen, Dichtmaterialien oder benachbarten Grundelementen hergestellt werden.

Es besteht auch die Möglichkeit, ein Grundelement mit mindestens zwei unterschiedlichen Füllmassen zu versehen, die dann übereinander ausgebildet sind und jeweils ein Funktionselement bilden können. Dabei können diese die Funktionselemente Membran mit Elektrode oder Elektrode mit bipolarer Platte oder Folie sein. In dieser Form kann der Herstellungsaufwand reduziert werden. Es besteht dabei auch die Möglichkeit, wie bereits angesprochen, mit einer dritten Füllmasse eine Oberflächenstruktur auszubilden, die dann als Strömungskanal/-kanäle für Edukte/Elektrolyten entlang der Elektrodenoberfläche genutzt werden kann.

Bei der erfindungsgemäßen Anordnung elektrochemischer Zellen ist mindestens eine elektrochemische Zelle mit mehreren übereinander angeordneten und mit ihren äußeren Randbereichen fluiddicht verbundenen Grundelementen, zwei Elektroden, einer Membran, jeweils mindestens zwei Zu- und Abführungen sowie mindestens zwei durchströmbaren Bereichen für Edukte, insbesondere für zwei unterschiedliche Elektrolyte, die jeweils in Kontakt mit einer der beiden Elektroden stehen, gebildet. Selbstverständlich können auch mehrere solcher elektrochemischer Zellen zu einem Stapel zusammengefasst sein und durch entsprechende elektrische Verschaltung kann in monopolarer oder bipolarer Bauweise eine höhere elektrische Spannung genutzt werden.

Je nach Art der eingesetzten elektrochemischen Zellen können als Edukte wässrige Elektrolyte oder Elektrolyte auf Basis organischer Lösungsmittel oder ionische Flüssigkeiten oder Wasser oder Alkohole oder Wasserstoff, Kohlenwasserstoffverbindungen, Sauerstoff, ein Sauerstoff enthaltendes Gasgemisch oder redox aktive Polymere in organischen Lösungsmitteln eingesetzt werden.

In einer bevorzugten Variante können die Zulaufkanäle für Edukt so gestaltet sein, dass sie sich bei einem Pumpen- oder Verdichterstillstand selbst entleeren. Dies hat den Vorteil, dass die ionisch leitende Verbindung zweier Halbzellen eines Kreislaufs unterbrochen wird und die Selbstentladung im Stillstand bei einer Redox-Flow-Batterie, als ein Beispiel einer elektrochemischen Zelle, verringert oder gar vermieden werden kann. Die Ausgestaltung solcher Kanäle hängt von der Orientierung der Grundelemente und der Strömungsrichtung des Edukts/Elektrolyten durch den Zellstapel ab.

Ein weiterer Vorteil ist es, dass definierte Strömungswege in Randbereichen von Elektroden realisiert werden können. In den Randbereichen der Elektroden besteht beispielsweise die Gefahr von gasbildenden Nebenreaktionen beim Laden, da der Durchfluss bzw. Volumenstrom hier oftmals verringert ist, und sich sogenannte "Totzonen" ausbilden können. Dies kann verhindert werden, indem die jeweilige Elektrode allseitig, besonders an den seitlichen Rändern, in das Flächengebilde von Grundelementen eingebunden wird. Hierdurch kann eine sichere hohe Durchströmung in den Randbereichen erreicht werden. Weiter können bedingt durch Nebenreaktionen Gase, wie z.B. Wasserstoff und Sauerstoff in der Elektrode entstehen. Durch die nutzbare Struktur eines entsprechend gestalteten Grundelements kann der Austrag dieser Gase deutlich verbessert werden.

Figur 23 zeigt ein Beispiel für eine integrierte Elektrode 3.1 mit einem Grundelement GE-14 mit seitlichen durchströmbaren Randbereichen eines Grundelements GE-11.

Um eine gleichmäßige Anströmung einer Elektrode zu erreichen, sollten mehrere Zu- und Abführungen 4 und 5 für Edukt/Elektrolyt über die Elektrodenbreite bei einer Halbzelle vorhanden sein. Zur Reduktion der Shunt-Currents kann eine Mindestlänge und ein Maximaldurchmesser der Zu- und Abführungen eingehalten werden. Zur Ausgestaltung dieser Kanäle sind unterschiedliche Varianten denkbar. Beispielhaft sind hier zwei Varianten möglich. In einer ersten Variante werden aus einem Sammelkanal 18 mehrere Einzelkanäle geführt, die an verschiedenen Stellen der Elektrodenbreite im Einlaufbereich münden. Die Anzahl der Einzelkanäle ist dabei variabel, jedoch immer größer als eins.

Figur 24 zeigt ein Beispiel für ein Grundelement GE- 3 mit vier Sammelkanälen 18 und mehrfachen Zu- und Abführkanälen 4 und 5.

In einer zweiten Variante werden aus mehreren Sammelkanälen mehrere Einzelkanäle geführt, die an verschiedenen Stellen der Elektrodenbreite im Einlaufbereich münden. Vorteilhafterweise sollten alle Einzelkanäle denselben Strömungswiderstand haben, um eine gleichförmige Aufteilung des Volumenstroms in die jeweilige Halbzelle zu erreichen. Alle Einzelkanäle sollten denselben ionischen Widerstand aufweisen, um eine Minimierung der Shunt-Currents zu erreichen.

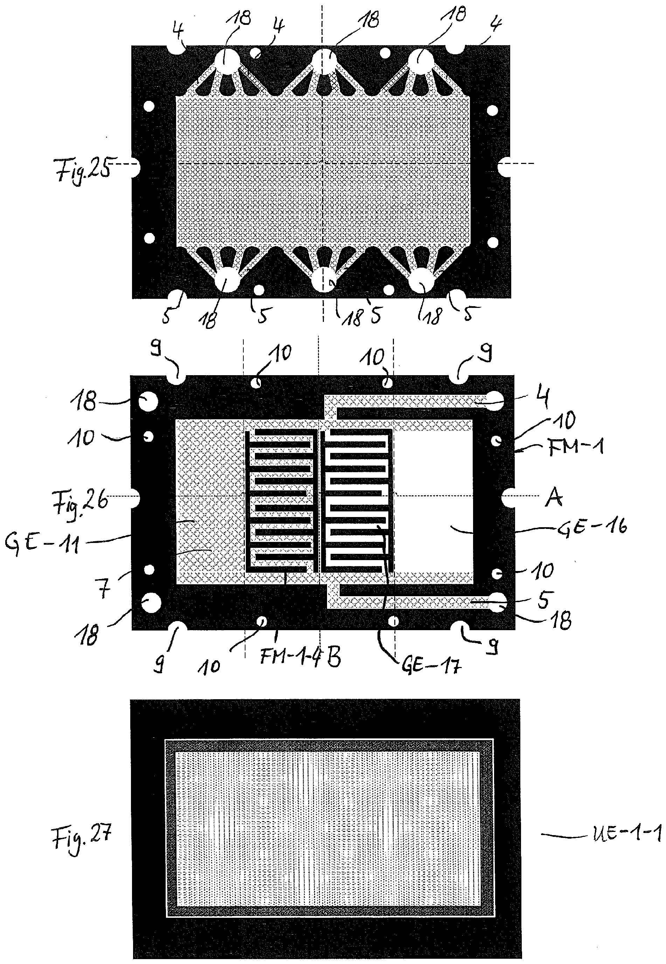

Figur 25 zeigt ein Beispiel für ein Grundelement mit mehreren Sammelkanälen 18 und mehrfachen Zu- und Abführkanälen 4 und 5.

Kommen mehrere Sammelkanäle 18 zum Einsatz, kann eine Verteilerplatte vorhanden sein, die die Hauptströmung auf die Sammelkanäle 18 aufteilt. Da die Kanalstruktur in Ebenen aufgebaut werden kann, ist es auch möglich, den Anströmbereich in mehreren Ebenen darzustellen. Dies ist besonders vorteilhaft, um bei dem Einsatz flüssiger niederviskoser Edukte, wie beispielsweise nichtwässrige Elektrolyte einen geringen Druckverlust über die Zellanordnung zu erreichen, indem die durchströmte Querschnittsfläche durch ein Stapeln mehrere Grundelemente mit eingebrachten Kanalstrukturen vergrößert werden kann. Neben einer Minimierung der Druckverluste und der Shunt-Currents können bei gleichzeitig homogener Eduktverteilung auf die Elektrode(n) erreicht werden.

Im Bereich der Projektionsfläche zu einer Membran 2 können teilweise Bereiche mit Durchbrechungen und/oder teilweise Bereiche mit mindestens einer Füllmasse, die ausgewählt ist aus den vier vorab erläuterten Füllmassen FM-1 bis FM-4, ausgebildet sein, wodurch mit der angrenzenden Membran 2 und Elektrode 3 oder mit der angrenzenden Elektrode 3 und bipolare Platte/ Folie 6 oder mit der angrenzenden Membran 2 und bipolare Platte/ Folie 6 ein Flow-Field erhalten werden kann, in dem Edukt/Elektrolyt definiert zwischen Elektrode 3 und Membran 2 oder zwischen Elektrode 3 und bipolare Platte/ Folie 6 oder zwischen Membrane 2 und bipolare Platte/Folie 3 geführt werden kann.

Figur 26 zeigt ein Beispiel für ein Grundelement mit einer einfachen Anströmung und beispielhaften Ausführungen dieser Flow-Fields in vier Varianten. Dabei ist rechts und links der Symmetrielinie B eine mäanderförmige Strömungsführung gezeigt, die durch entsprechende Verfüllung mit einer Füllmasse FM-1 bis FM-4erreicht werden kann.

Die Varianten 1 bis 4 in Figur 26 sind als mögliche Varianten zu verstehen, die gemeinsam die gesamte Fläche des durchströmbaren Bereichs 7 für Edukte und Reaktionsprodukte umfassen.

Figur 23 zeigt ein Beispiel für eine in einem Grundelement GE-11 integrierte Elektrode 3.1 mit seitlichen durchströmbaren Randbereichen.

Mit den Ausführungen eines Grundelementes GE-11 bis GE-19 lassen sich Untereinheiten für die Ausbildung von Halbzellen, Zellen und Zellstapeln definieren.

Je nach Art des Anwendungsgebietes kann die Funktionalität der einzelnen Grundelemente angepasst werden. Die Reihenfolge der Stapelung dieser Grundelemente ist ebenfalls abhängig von der Anwendung. Vorteilhaft ist es, eine Symmetrie entlang einer Symmetrielinie A und/oder B einzuhalten. So ist es möglich, mit nur einem Grundelement mit definierten Zu- und Abführungen 4 und 5 für Edukte und Reaktionsprodukte beide Halbzellen einer elektrochemischen Zelle auszubilden, indem ein Grundelement um jeweils 180° in der Ebene, in Bezug zum benachbarten Grundelement gedreht, angeordnet wird. So besteht die Möglichkeit, das jeweilige Edukt gleichmäßig über die Oberfläche der jeweiligen Elektrode 3 strömen lassen zu können.

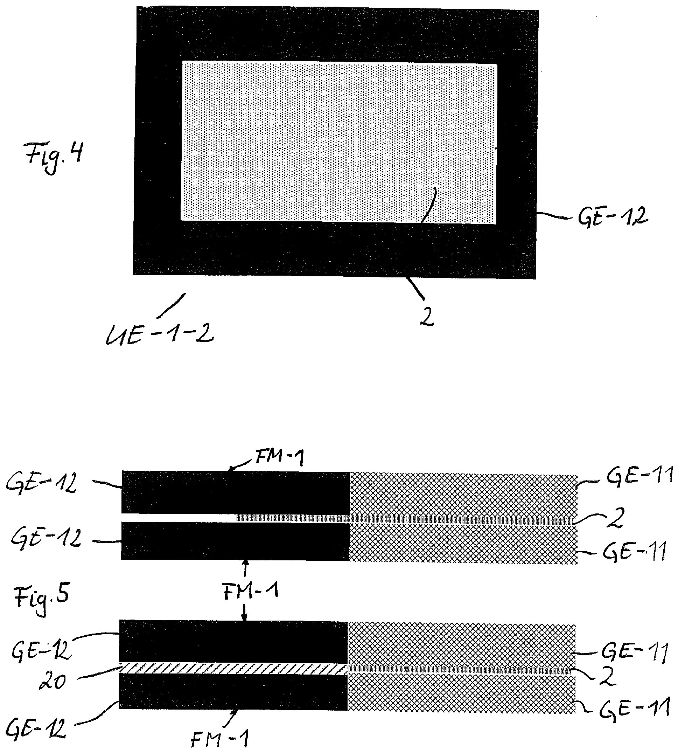

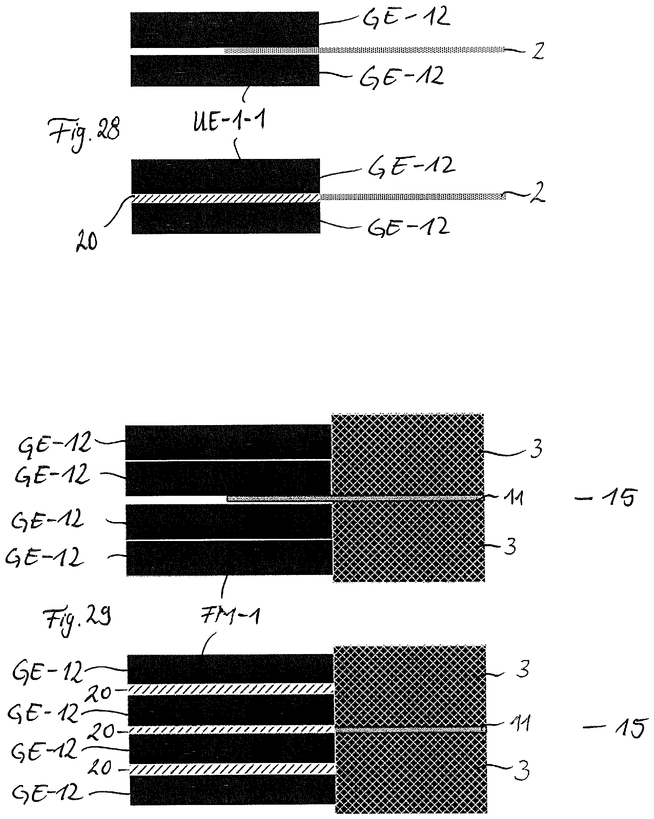

Eine erste Untereinheit kurz: UE-1 einer elektrochemischen Zelle stellt die Membraneinheit 1 dar, die in Figuren 4 und 27 in einer Draufsicht und in Figuren 5 und 28 in einer Schnittansicht gezeigt ist.

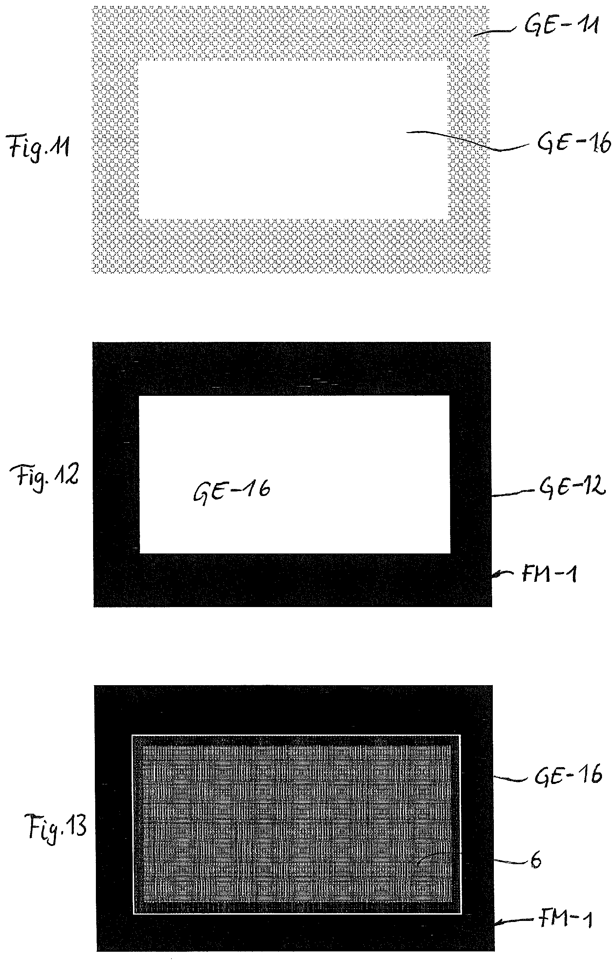

Die erste Variante einer Membraneinheit 1 (UE-1-1) besteht dabei aus einem Verbund von mindestens zwei Grundelementen mit flächiger Durchbrechung im mittleren Bereich, wie in Figur 12 dargestellt und einer Membran 2. Die Membran 2 wird zwischen diesen zwei Grundelementen eingebunden und mit diesen Grundelementen klemmend gehalten. Die Auflagefläche der Membran 2 auf den jeweiligen Grundelementen dient als Kontaktfläche und wird mittels kraftschlüssiger, adhäsiver, stoffschlüssiger Materialverbindung oder einer Kombination davon zu einem flüssigkeits- und gasdichten Verbund gebracht. Hierdurch ist es möglich, die Membran flüssigkeits- und gasdicht, sowohl in der x-y-Ebene als auch senkrecht hierzu im äußeren Randbereich, einzufassenDer Bereich eines Grundelements GE-12 kann unabhängig zur Membran 2 mit anderen Grundelementen verbunden werden. Dadurch ist es möglich, die Grundelemente flüssigkeits- und gasdichten, sowohl in der x-y-Ebene, als auch senkrecht hierzu, zu verbinden. Figur 27 zeigt eine Draufsicht und Figur 28 eine Schnittansicht dieser Ausführungsform einer Membraneinheit 1 als UE-1-1. Eine solche Membraneinheit 1 ist damit in sich flüssigkeits- und gasdicht und kann als Verbundeinheit einfach weiterverarbeitet werden.

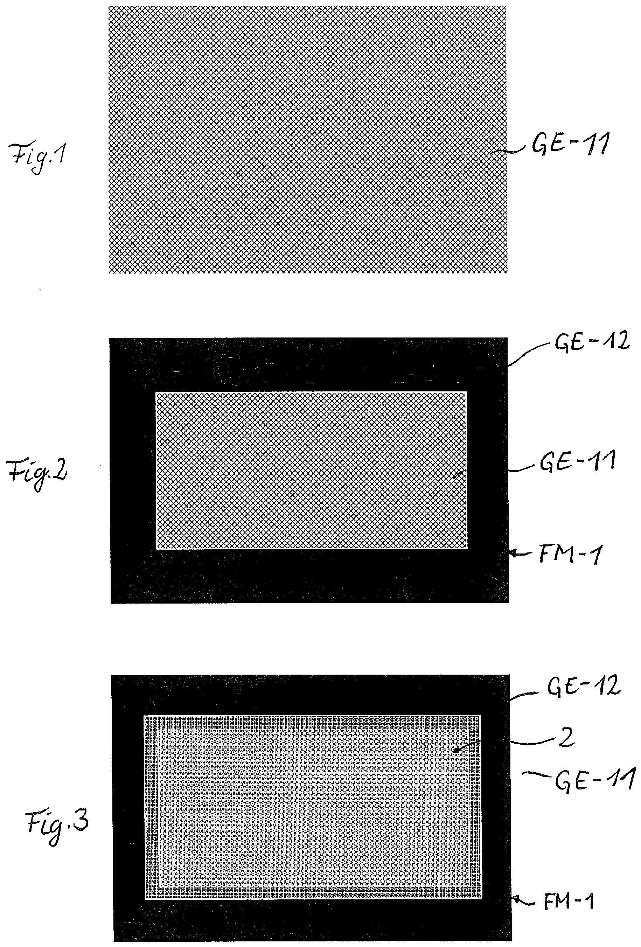

Entsprechend der Variante UE-1-1 wird eine Membraneinheit 1 als Untereinheit UE-1-2 gebildet, die aus einem Verbund von mindestens zwei Grundelementen ohne flächige Durchbrechung im mittleren Bereich, wie in Figur 2 dargestellt und einer Membran 2 besteht. Neben der Ausbildung eines fluiddichten Verbunds mit den beiden Grundelementen im äußeren Randbereich ist die Membran 2 beidseitig von einem flächigen Gebilde eines Grundelements eingefasst.

Figur 4 zeigt eine Draufsicht und Figur 5 eine Schnittansicht dieser Ausführungsform einer Membraneinheit 1 als Untereinheit UE-1-2. Dabei werden gemäß der unteren Darstelllung zwei Grundelemente GE-12 und die Membran 2 mittels der stoffschlüssigen Verbindung 20 am äußeren Rand miteinander verbunden.

In dieser Variante UE-1-2 kann die Struktur des Flächengebildes eines oder mehrerer Grundelemente(s) im durchströmbaren Bereich die Fluidverteilung zwischen Membran 2 und Elektrode 3 begünstigen, indem die laminare Grenzschicht, die an der Membran 2 für das jeweilige Edukt vorhanden ist, zumindest teilweise gestört wird.

Diese Variante einer Untereinheit UE-1-2 kann entsprechend der Ausgestaltung von Grundelementen nach Figur 26 in Teilbereichen verfüllte Bereiche hier FM-1 bis FM-4 bzw. Bereiche mit Durchbrechungen aufweisen, die im Wesentlichen die Funktion von Flow-Fields erfüllen und zur Verbesserung der Konzentrationsverteilung des jeweiligen Edukts/Elektrolyten zwischen Membran 2 und Elektrode 3 und innerhalb der Elektrode 3 dienen. Damit ergeben sich weitere Ausgestaltungsvarianten.

Alle beschriebenen Varianten können aber auch eine neuartige integrierte Membran 2.1 enthalten, die mit einem Grundelement GE-13 gebildet ist, wie in Figur 19 dargestellt, und die an die Stelle der Membran 2 eingesetzt werden kann.

So kann eine Membran 2 oder eine in ein weiteres Grundelement integrierte Membran 2.1 kraft- oder stoffschlüssig fluidisch dicht im äußeren Randbereich zwischen zwei Grundelementen eingebunden sein, wodurch eine Membraneinheit 1 gebildet ist.

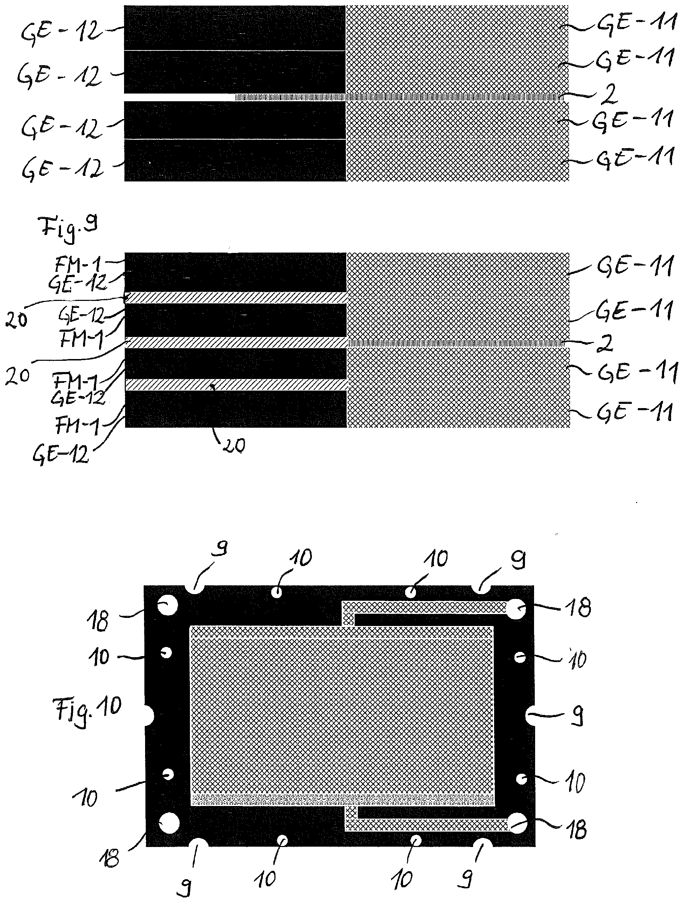

Mittels Stanzen oder anderen Verfahren können nach der Herstellung der Membraneinheit 1, Durchbrechungen in allen Grundelementen GE-X ausgebildet werden, um Sammelkanäle 18, Positionierungshilfen 9 sowie Aufnahmen 10 für eine mechanische Verspannung zur erhalten. Eine mögliche Anordnung dieser Durchbrechungen geht aus Figur 10 hervor.

So kann eine Membran 2 oder eine in ein weiteres Grundelement integrierte Membran 2.1 kraft- oder stoffschlüssig fluidisch dicht im äußeren Randbereich zwischen zwei Grundelementen eingebunden sein, wodurch eine Membraneinheit 1 gebildet ist. Mindestens eine Membraneinheit 1 und mindestens eine Elektroden-Bipolarplatten-Einheit 15 können einen hydraulisch dichten Verbund bilden, und dabei die Membraneinheit 1 und die Elektroden-Bipolarplatten-Einheit 15 direkt übereinander angeordnet und kraft- oder stoffschlüssig verbunden sein, so dass eine Membran-Elektroden-Bipolarplatten-Einheit 15 gebildet ist. Die beiden letztgenannten Möglichkeiten können insbesondere bei Brennstoffzellen oder für eine Elektrolyse eingesetzt werden.

Für die Herstellung einer neuartigen integrierten Membran 2.1 nach der Beschreibung nach Grundelement GE-13 kann auf einen ionenleitenden Kunststoff zurückgegriffen werden, der das flächige Gebilde eines Grundelements darstellt. Dieses ionenleitfähige flächige Gebilde sollte dabei anionische oder kationische funktionelle Gruppen aufweisen. Das Material kann beispielsweise dem einer zweiten Füllmasse FM-2 entsprechen.

Eine zweite Variante einer Untereinheit kurz: UE-2 kann eine Elektroden-Bipolarplatte-Einheit darstellen.

Die so erhaltene Elektroden-Bipolarplatten-Einheit kann aus einem Verbund von mindestens zwei Grundelementen mit jeweils flächiger Durchbrechung im mittigen Bereich dieser Grundelemente, wie in Figur 12 dargestellt und einer bipolaren Platte bzw. bipolaren Folie 6 gebildet sein. Die bipolar Platte bzw. bipolare Folie 6 wird dabei zwischen diesen zwei Grundelementen im Bereich der flächigen Durchbrechung eingebunden. Die Auflagefläche der bipolaren Platte bzw. bipolaren Folie 6 auf den jeweiligen Grundelementen im verfüllten Bereich wird zu einem flüssigkeits- und gasdichten Verbund gebracht. Dadurch ist es möglich, die bipolare Platte bzw. bipolare Folie flüssigkeits- und gasdicht, sowohl in der x-y-Ebene als auch senkrecht hierzu, einzufassen. Um die Dicke der bipolaren Platte bzw. bipolaren Folie im verfüllten Bereich eines oder mehrerer Grundelemente(s) auszugleichen kann entweder ein weiteres Grundelement, mit flächiger Durchbrechung, oder ein Dichtmaterial eingesetzt werden. Der Bereich eines Grundelements GE-12 kann unabhängig zur bipolaren Platte bzw. bipolaren Folie mit anderen Grundelementen verbunden werden. Dadurch ist es möglich, die Grundelemente flüssigkeits- und gasdichten, sowohl in der x-y-Ebene als auch senkrecht hierzu, zu verbinden. Im Bereich der flächigen Durchbrechungen der Grundelemente werden jeweils die Elektroden platziert.

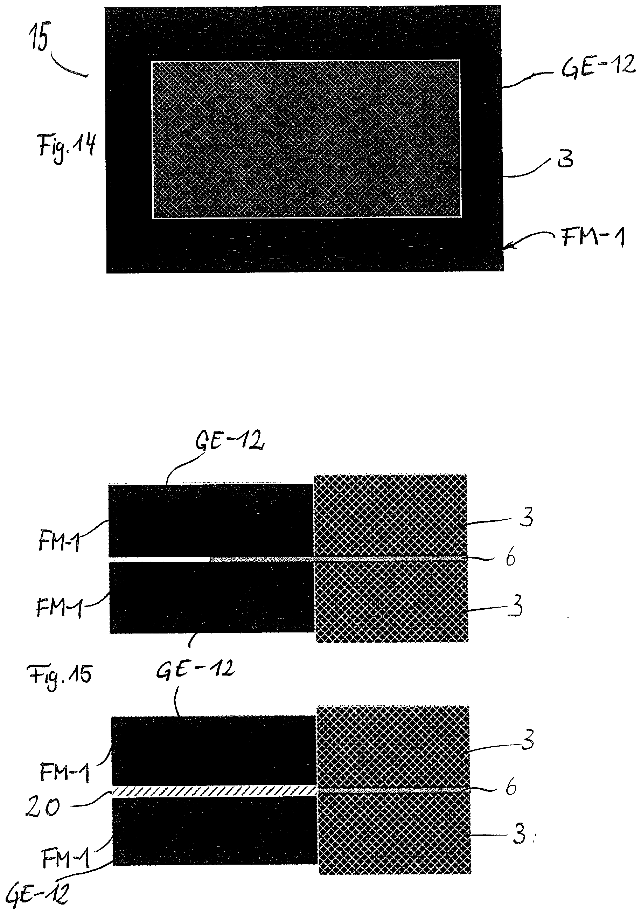

Eine Draufsicht einer solchen Elektroden-Bipolarplatten-Einheit 15 ist in Figur 14 und eine Schnittansicht in Figur 15 dargestellt. Dabei sind Grundelemente GE-12 sowie die bipolare Platte oder Folie 6 mit einer stoffschlüssigen Verbindung 20 miteinander verbunden.

Durch Wahl der Dicke d der Grundelemente und der Anzahl z der Grundelemente pro Halbzelle von elektrochemischen Zellen kann eine gezielte Einstellung der Elektrodendicke halbzellenspezifisch erfolgen. Zudem kann durch die Abstimmung der unverpressten Elektrode mit der Gesamtdicke der Halbzelle d HZ = n GE * z GE eine definierte Verpressung der Elektrode halbzellenspezifisch erreicht werden. Hierdurch definieren sich die Permeabilität und die elektrische Leitfähigkeit der Elektrode sowie der elektrische Kontaktwiderstand zwischen der bipolar Platte bzw. bipolare Folie und der Elektrode. Eine Schnittansicht einer Elektroden-Bipolarplatten-Einheit 15 mit jeweils zwei Grundelementen nach Figur 12 für die Aufnahme einer Elektrode 3 zeigt Figur 29.

Die Elektrode 3 kann entweder durch eine Anpresskraft auf die bipolare Platte bzw. bipolare Folie 6 verpresst, adhäsiv oder mittels Stoffschluss auf die bipolare Platte bzw. bipolare Folie 6 aufgebracht werden. Elektrisch leitfähige Klebstoffe oder thermische Fügeverfahren sind bekannte Verfahren, die hierfür genutzt werden können. In einer weiteren Variante UE-2-2 kann die bipolare Platte bzw. bipolare Folie 6 aus einer Untereinheit UE-2-1 durch eine neuartige integrierte bipolare Folie 6.1 ersetzt werden, die aus einem Grundelement GE-15 besteht, dessen flächiger mittiger Bereich mit einer zweiten Füllmasse FM-4 verfüllt ist.

In einer weiteren Variante einer Untereinheit UE-2-3 kann die Elektrode 3 aus einer Untereinheit UE-2-1 durch eine neuartige integrierte Elektrode 3.1 ersetzt werden, die aus einem Grundelement GE-14 gebildet ist, deren flächiger mittiger Bereich mit einer dritten Füllmasse FM-3 verfüllt ist.

In einer weiteren Variante einer Untereinheit UE-2-4 kann sowohl die bipolare Platte bzw. bipolare Folie 6 aus einer Untereinheit UE-2-1 durch eine neuartige integrierte bipolare Folie 6.1 nach Grundelement GE-15, also auch die Elektrode3 aus einer Untereinheit UE-2-1 durch eine neuartige integrierte Elektrode 3.1 nach Grundelement GE-14 ersetzt werden.

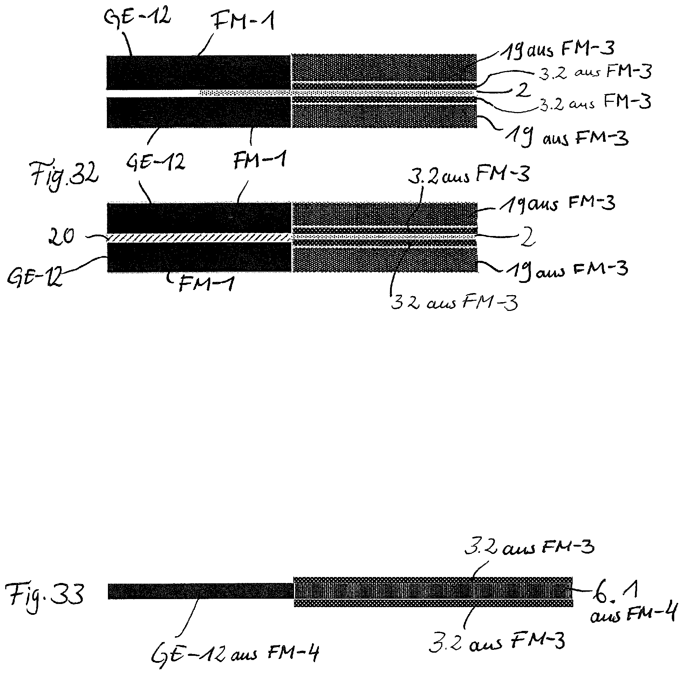

In einer weiteren Variante einer Untereinheit UE-2-5 kann die bipolare Platte bzw. bipolare Folie 6.1und die Elektrode 3.1 jeweils ausschließlich durch eine Füllmasse auf dasselbe Grundelement aufgetragen werden. Hierdurch wird ein Funktionselement gebildet, das aus drei Schichten, nämlich Elektrode 3.2, bipolarer Platte/Folie 6.2 und Elektrode 3.2 besteht. Eine integrierte bipolare Platte bzw. bipolare Folie 6.1 wird mit einem Grundelement GE-15 gebildet, das im flächigen mittigen Bereich mit einer vierten Füllmasse FM-4 verfüllt ist. Auf diese Füllmasse wird beidseitig eine dritte Füllmasse der Elektrode FM-3 aufgetragen. Die Schichten sind stoffschlüssig miteinander verbunden. Hierdurch entsteht vorteilhaft ein minimaler elektrischer Kontaktwiderstand zwischen den einzelnen Schichten. Vorzugsweise bildet die dritte Füllmasse FM-3 eine Oberflächenstruktur aus, die als Strömungskanal/-kanäle für Edukte/Elektrolyten entlang der Elektrodenoberfläche genutzt werden kann. Eine Schnittansicht der Variante einer Untereinheit UE-2-5 ist in Figur 33 dargestellt.

Mittels Stanzen oder anderen Verfahren werden nach der Herstellung der Elektroden-Bipolarplatten-Einheit Durchbrechungen in allen Grundelementen GE-X ausgebildet, um Sammelkanäle 18, Positionierungshilfen 9 sowie Aufnahmen 10 für eine mechanische Verspannung zur erhalten. Eine mögliche Anordnung dieser Durchbrechungen geht aus Figur 10 hervor.

Für die Herstellung einer neuartigen bipolaren Folie und einer neuartigen Elektrode kann auf eine faserartige oder poröse Struktur auf Basis von Kohlenstoff, Graphit, Kohlenstofffasern, Graphitfasern oder Glasfasern, einem Zeolith, Aluminiumoxid (Al₂O₃), Titandioxid (TiO₂) und/oder Zirkonoxid (ZrO₂) zurückgegriffen werden, die das flächige Gebilde eines Grundelements darstellt.

Mindestens ein weiteres Grundelement mit definierten Zu- und Abführungen für Edukt/Elektrolyt und Reaktionsprodukte kann ergänzend die Elektroden-Bipolarplatten-Einheit 15 abschließen. Diese Ausführung kann im flächigen durchströmbaren Bereich nach den Beispielen für Grundelemente nach Figur 26 gestaltet werden.

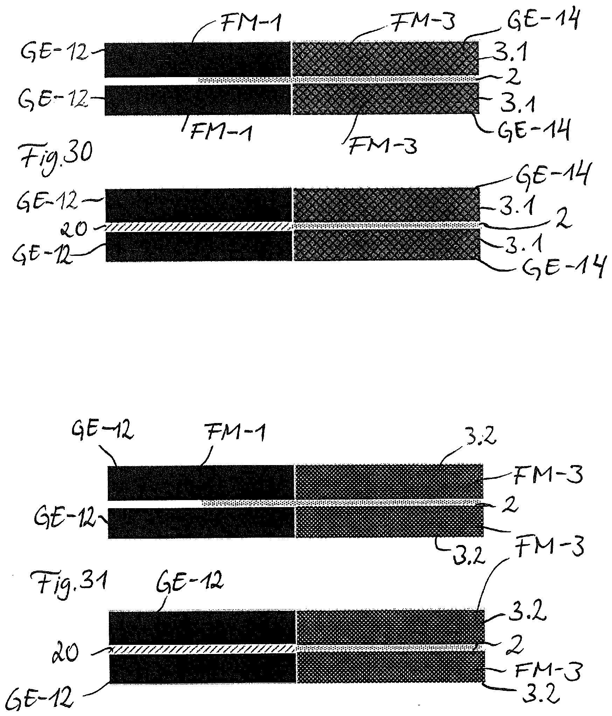

Eine dritte Variante einer Untereinheit (kurz: UE-3) kann eine Membran-Elektroden-Einheit darstellen. Diese kann in einer ersten Variante einer Untereinheit UE-3-1 auf einer Membraneinheit 1 aufbauen, indem in den unverfüllten Bereich einer Untereinheit UE-1-2 eine dritte Füllmasse FM-3 aufgetragen wird und so eine für Edukt/Elektrolyt über- oder durchströmbare Elektrode entsteht. Hierdurch wird ein Schichtaufbau gebildet, der aus Elektrode, Membran, Elektrode besteht. Vorzugsweise bildet die dritte Füllmasse FM-3 eine Oberflächenstruktur aus, die als Strömungskanal/-kanäle für Edukte/Elektrolyten entlang der Elektrodenoberfläche genutzt werden kann. Eine Schnittansicht dieser Variante einer Untereinheit UE-3-1 ist in Figur 30 dargestellt.

In einer Variante UE-3-2 wird auf eine neuartige in ein Grundelement GE-13 integrierte Membran 2.1 aus einer zweiten Füllmasse FM-2 beidseitig jeweils mindestens ein Grundelement GE-14 mit einer neuartigen in eine integrierten Elektrode 3.1 aus einer drittem Füllmasse FM-3 aufgebracht. Damit besteht diese Einheit aus mindestens drei Grundelementen. Vorzugsweise sind die Schichten stoffschlüssig miteinander verbunden. Die Verbindung der Grundelemente erfolgt entsprechend obiger Beschreibung.

In einer Variante einer Untereinheit UE-3-3 wird auf eine neuartige in ein Grundelement GE-13 integrierte Membran 2.1, die mit der Füllmasse FM-2 gebildet ist, beidseitig eine dritte Füllmasse FM-3 aufgebracht. Damit handelt es sich um eine Einheit mit nur einem Grundelement. Die Schichten sind vorzugsweise stoffschlüssig miteinander verbunden. Vorzugsweise bildet die dritte Füllmasse FM-3 eine Oberflächenstruktur aus, die als Strömungskanal/- kanäle für Edukte/Elektrolyten entlang der Elektrodenoberfläche genutzt werden kann.

In einer Variante einer Untereinheit UE-3-4 wird auf eine Membraneinheit aufgebaut, indem auf die Membrane als Untereinheit UE-1-1 beidseitig eine dritte Füllmasse FM-3 aufgetragen wird und so eine für Edukt/Elektrolyt an- oder durchströmbare Elektrode entsteht. Hierdurch wird ein Funktionselement gebildet, das aus drei Schichten, nämlich Elektrode, Membran, Elektrode besteht. Die Schichten sind stoffschlüssig miteinander verbunden. Hierdurch entsteht vorteilhaft ein minimaler elektrischer Kontaktwiderstand zwischen den einzelnen Schichten. Vorzugsweise bildet die dritte Füllmasse FM-3 eine Oberflächenstruktur aus, die als Strömungskanal/-kanäle für Edukte/Elektrolyten entlang der Elektrodenoberfläche genutzt werden kann. Eine Schnittansicht dieser Variante einer Untereinheit UE-3-4 ist in Figur 31 dargestellt.

In einer Variante UE-3-5 wird auf eine Membraneinheit 1 aufgebaut, indem auf die Membran 2 einer Untereinheit UE-1-1 beidseitig eine dritte Füllmasse FM-3 aufgetragen wird und so eine für Edukt/Elektrolyt anströmbare Elektrode 3.2 entsteht. Eine weitere dritte Füllmasse FM-3 wird beidseitig auf die entstandene Elektrode aufgetragen, um eine für Edukt/Elektrolyt diffusionsoffene Schicht auszubilden. Hierdurch wird ein Funktionselement gebildet, das aus fünf Schichten, nämlich Diffusionsschicht 19, Elektrode 3, Membran 2, Elektrode 3, Diffusionsschicht 19besteht. Die Schichten sind stoffschlüssig miteinander verbunden. Hierdurch entsteht vorteilhaft ein minimaler elektrischer Kontaktwiderstand zwischen den einzelnen Schichten. Eine Schnittansicht dieser Variante UE-3-5 ist in Figur 32 dargestellt.

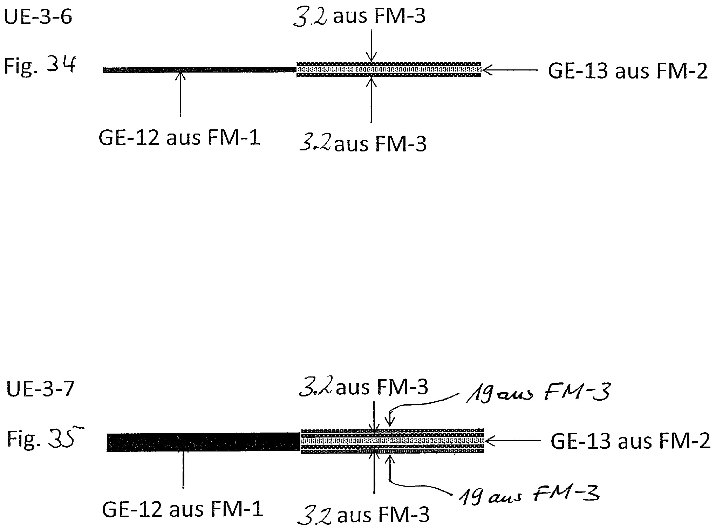

Die Varianten der Untereinheiten UE-3-4 und UE-3-5 können natürlich anstatt der Untereinheit UE-1-1 auch auf eine in einem Grundelement GE-13 integrierten Membran 2.1 aus einer zweiten Füllmasse FM-2 aufbauen. Damit ergibt sich eine weitere Variante UE-3-6 für einen dreischichtigen Aufbau, die in Figur 34 und eine Variante UE-3-7 für einen fünfschichtigen Aufbau in Figur 35 dargestellt ist.

Mittels Stanzen oder anderen Verfahren werden nach der Herstellung der Membran-Elektroden-Einheit Durchbrechungen in allen Grundelementen GE-X ausgebildet, um Sammelkanäle 18, Positionierungshilfen 9 sowie Aufnahmen 10 für eine mechanische Verspannung zur erhalten. Eine mögliche Anordnung dieser Durchbrechungen geht aus Figur 10 hervor.

Mindestens ein weiteres Grundelement mit definierten Zu- und Abführungen für Edukt/Elektrolyt und Reaktionsprodukte kann ergänzend die Membran-Elektroden-Einheit abschließen. Diese Ausführung kann im flächigen durchströmbaren Bereich nach den Beispielen für Grundelemente nach Figur 26 gestaltet werden.

Eine vierte Variante einer Untereinheit (kurz: UE-4) kann eine Flow-Field - Bipolarplatten-Einheit 16 darstellen. Diese kann in einer ersten Variante UE-4-1 aus einem Verbund von mindestens zwei Grundelementen, wie in Figur 26 dargestellt und einer bipolar Platte bzw. bipolaren Folie 6 gebildet sein. Dabei kann das Flow-Field durch Einbringen einer vierten Füllmasse FM-4 in den unverfüllten mittigen Bereich der Grundelemente ausgebildet werden. Hierdurch entstehen, wie in Figur 26 dargestellt, für die Edukte durchströmbare Kanalstrukturen. Dabei steht die bipolare Platte/Folie 6 mit der dritten Füllmasse FM-3 in kraft- oder stoffschlüssigen Kontakt. Die bipolar Platte bzw. bipolare Folie 6 wird dabei zwischen diesen zwei Grundelementen eingebunden. Die Auflagefläche der bipolaren Platte bzw. bipolaren Folie 6 auf den jeweiligen Grundelementen im verfüllten Bereich wird zu einem flüssigkeits- und gasdichten Verbund gebracht. Dadurch ist es möglich, die bipolare Platte bzw. bipolare Folie 6 flüssigkeits- und gasdicht, sowohl in der x-y-Ebene als auch senkrecht hierzu, einzufassen. Um die Dicke der bipolaren Platte bzw. bipolaren Folie 6 im verfüllten Bereich eines oder mehrerer Grundelemente(s) auszugleichen kann entweder ein weiteres Grundelement mit flächiger Durchbrechung, oder ein Dichtmaterial eingesetzt werden. Der Bereich eines Grundelements GE-12 kann unabhängig zur bipolaren Platte bzw. bipolaren Folie mit anderen Grundelementen verbunden werden. Dadurch ist es möglich, die Grundelemente flüssigkeits- und gasdichten, sowohl in der x-y-Ebene, als auch senkrecht hierzu, zu verbinden.

In einer Variante UE-4-2 wird auf eine neuartige integrierte bipolare Platte oder Folie 6.1 als Grundelement GE-15 beidseitig eine vierte Füllmasse FM-4 so aufgetragen, dass eine Kanalstruktur entsprechend Figur 26 entsteht und so ein für Edukt/Elektrolyt durchströmbares Flow-Field entsteht. Hierdurch wird ein Funktionselement gebildet, das aus drei Schichten, nämlich Flow-Field, bipolare Platte/Folie 6.1, Flow-Field besteht. Die Schichten sind stoffschlüssig miteinander verbunden. Hierdurch entsteht vorteilhaft ein minimaler elektrischer Kontaktwiderstand zwischen den einzelnen Schichten.

Mittels Stanzen oder anderen Verfahren werden nach der Herstellung der Flow-Field-Bipolarplatte-Einheit Durchbrechungen in allen Grundelementen GE-X ausgebildet, um Sammelkanäle 18, Positionierungshilfen 9 sowie Aufnahmen 10 für eine mechanische Verspannung zur erhalten. Eine mögliche Anordnung dieser Durchbrechungen geht aus Figur 10 hervor.

Eine fünfte Variante einer Untereinheit (kurz: UE-5) stellt eine Membran-Elektroden-Bipolarplatten-Einheit dar.

Eine Membran-Elektroden-Bipolarplatten-Einheit kann aus einem Verbund von mindestens einer Membraneinheit 1 und einer Elektroden-Bipolarplatten-Einheit 15, oder aus einer Membran-Elektroden-Einheit und einer bipolaren Folie 6, oder aus einer Membran-Elektroden-Einheit und einer Flow-Field-Bipolarplatten-Einheit, die direkt übereinander gelegt werden, gebildet sein.

Die Kontaktflächen der einzelnen Einheiten werden kraft- oder stoffschlüssig zu einem gas- und flüssigkeitsdichten (hydraulisch dichten) Verbund gebracht. Eine mit einer Elektroden-Bipolarplatten-Einheit 15 und einer Membraneinheit 1 gebildete Einheit kann insbesondere für Brennstoffzellen oder eine Elektrolyse eingesetzt werden._Aus mehreren solchen Untereinheiten UE-5 können somit beliebige Zellzahlen in Form von Zellverbünden oder Stacks zusammengeführt werden. Die jeweils letzte Halbzelle schließt mit einem Stromsammler 12 und einer Platte 14 ab, die jeweils gegeneinander mechanisch verpresst werden können. Ein Stromsammler 12 kann eine Bipolarplatte 6 sein, an der die elektrische Spannung über einen Kontakt abgegriffen oder zugeführt werden kann.

Die Varianten der Untereinheiten UE-1, UE-2, UE-3,UE-4 und UE-5 stellen für den Montageprozess besonders geeignete Baugruppen dar, die jeweils in sich für das Edukt bzw. den Elektrolyten hydraulisch/pneumatisch dicht und diffusionsdicht sein können. Zudem kann jede Untereinheit als abgeschlossene Baugruppe einfach in einem Montageprozess gehandhabt werden. Weiterhin kann die für den Zellstapel erforderliche Anpresskraft reduziert werden, da die Dichtwirkung vorzugsweise durch Stoffschluss und nicht, oder zumindest nur teilweise durch Verpressung realisiert werden kann.

Aus den Untereinheiten UE-1 bis UE-5 lassen sich fluidisch dichte und diffusionsdichte Zellverbünde mit einer definierten Zellzahl herstellen.

Diese Zellverbünde können für den Montageprozess wiederum eigene Baugruppen bilden, die vor der eigentlichen Zellstapelmontage vormontiert und geprüft werden können. Bei einem Defekt einer elektrochemischen Zelle kann der Austausch dieser Zelle durch einen Wechsel des Zellverbundes, zu dem diese elektrochemische Zelle gehört, erfolgen. So kann ein Zellstapel von beispielsweise 100 Einzelzellen aus je fünf Zellverbünden aufgebaut sein, die jeweils zwanzig Einzelzellen in der Konfiguration der Varianten von Untereinheiten UE-1, UE-2, UE-3, UE-4, UE-5 aufweisen können.

Hierdurch wird die Montage eines Stacks wesentlich vereinfacht, da die Anzahl der Einzelteile stark reduziert ist und die Passungen von Membran 2, bipolarer Platte bzw. bipolarer Folie 6 und Elektrode 3 bereits durch die Untereinheiten UE-1 bis UE-5 definiert werden kann.

Vorteilhaft ist es, dass in einem Zellverbund alle Einzelzellen elektrisch in Reihe und fluidisch in Reihe oder bevorzugt parallel verschaltet sein können. Werden zwei Zellverbünde miteinander verbunden, können diese elektrisch in Reihe und fluidisch in Reihe oder bevorzugt parallel verschaltet werden.

Zwischen zwei Zellverbünden, die hydraulisch miteinander verschaltet sind, kann mindestens ein Grundelement (GE-X) oder eine Untereinheit (UE-Z) eingebunden sein, das/die die Eduktsammelkanäle 18 und/oder die Reaktionsproduktsammelkanäle 18 dieser Zellverbünde über jeweils einen Kanal miteinander verbindet, der so gestaltet ist, dass Nebenschlussströme in den Leitungen, in denen ein Edukt / Reaktionsprodukt geführt ist, reduziert sind. Es kann so eine gleichmäßige Volumenstromverteilung über die an- oder durchströmbaren Bereiche erreicht werden. Die Edukt- und/oder Reaktionsproduktsammelkanäle sind jeweils an mindestens eine Zu- und Abführung angeschlossen.

Damit ist es möglich, verschiedene Konfigurationen von Kaskadenanordnungen zu definieren. Mit dem vorgeschlagenen Konzept ist es möglich, je nach Kaskadenanordnung die einzelnen Untereinheiten in unterschiedlichen Varianten auszuführen.

So können Zweitank- und Viertanksysteme mit Elektrolyten bei Redox-Flow-Batterien ausgebildet werden. Bei einem Zweitanksystem wird das/der Edukt/Elektrolyt aus einem Vorlagetank entnommen und dem Zellstapel zugeführt. Nach der Reaktion der aktiven Spezies der Elektrolyten im Zellstapel mit einem Umsatz zwischen ca. 5% - 60% wird der Elektrolyt wieder in denselben Vorlagetank geleitet. Da der Anolyt und der Katholyt jeweils in getrennten Kreisläufen geführt werden kann, benötigt man für ein vollständiges System zwei Tanks. Bei einem Viertanksystem wird der Elektrolyt aus einem Vorlagetank entnommen und dem Zellstapel zugeführt. Nach der Reaktion der aktiven Spezies der Edukte/Elektrolyten im Zellstapel mit einem Umsatz zwischen 60% - 100% wird der Elektrolyt in einen zweiten Tank geleitet. Da der Anolyt und der Katholyt jeweils in getrennten Kreisläufen geführt werden, benötigt man für ein vollständiges System dann vier Tanks. In Viertanksystemen kann der eine Elektrolyt mit nur einem Durchlauf durch den Zellstapel von 0% auf 100% Ladegrad geladen und von 100% auf 0% entladen werden.

Für die Ausgestaltung von Kaskadenanordnungen innerhalb der Zellstapel können einzelne Zellverbünde hinsichtlich der Strömungspfade, der Materialeigenschaften der Membran, Elektrode und bipolaren Platte oder bipolarer Folie auf der Ebene der Untereinheiten für einen entsprechenden Ladegradbereich optimiert werden. Gerade für den Einsatz in Viertanksystemen kann dies vorteilhaft sein, da sehr hohe Umsätze angestrebt werden. Es ist bekannt, dass die Edukt-/Elektrolyteigenschaften, wie Viskosität, elektrische Leitfähigkeit und pH-Wert von den Konzentrationen der aktiven Spezies abhängig sind und damit vom jeweiligen Ladegrad abhängen. Die elektrischen Spannungsverluste durch IR-Verluste und Überspannung hängen ebenfalls von den Konzentrationen der aktiven Spezies und damit vom Ladegrad ab.

Angabe der bevorzugten Dicke für den Einsatz in Redox-Flow Batterien:

| | | | |
|---|---|---|---|
| Grundelemente: | 10µm | bis | 2 mm |
| Membrane: | 10µm | bis | 500 µm |
| Elektroden: | 5µm | bis | 5 mm |
| bipolare Platten / Folien: | 50µm | bis | 1 mm |
| Dichtelemente | 50µm | bis | 1 mm |
| Füllmassen: | 10µm | bis | 2,5 mm |

Zusammenfassend lassen sich folgende Vorteile der erfindungsgemäßen Anordnung elektrochemischer Zellen und des Stackdesigns gegenüber dem Stand der Technik zusammenfassen:
Das vorgeschlagene erfindungsgemäße Zell- und Stackkonzept zeichnet sich durch geringe Herstellungs- und Fertigungskosten, insbesondere durch den Verzicht eines Rahmens nach dem Stand der Technik aus. Es wird eine Struktur eines Flächengebildes als Grundelement verwendet, das durch einen "Rolle zu Rolle Prozess" zu Membraneinheiten, Membran-Elektrodeneinheiten und Elektroden-Bipolarplatten-Einheiten Flow-Field-Bipolarplatten-Einheiten weiterverarbeitet werden kann. Dies unterscheidet das vorgestellte Konzept wesentlich von den Konzepten nach dem Stand der Technik. Ein weiterer wesentlicher Vorteil ist die Möglichkeit, Varianten von Untereinheiten aufzubauen, die den Montageprozess wesentlich vereinfachen. Die Anzahl der zu verbauenden Einzelteile kann dadurch deutlich reduziert werden.

Damit kann eine Zell- und Stackarchitektur zur Verfügung gestellt werden, die im Vergleich zum Spritzguss oder zerspanenden Verfahren wesentlich geringere Anfangsinvestitionen zur Herstellung von Kleinserien erfordert. Gerade die hohen Investitionskosten für die Maschinen und Werkzeuge zur Herstellung von Zellstapeln nach dem Stand der Technik stellen aktuell eine hohe Markteintrittsbarriere für elektrochemische Wandler, im Besonderen für die die Redox-Flow-Technologie dar.

Zudem lassen sich Optimierungen hinsichtlich der Elektrodendicke und Elektrodenkompression leicht im Zellkonzept umsetzen. Weiterhin kann eine Entkoppelung der Permeabilität der Elektrode und dem Druckverlust über die jeweilige elektrochemische Zelle durch frei definierbare durchströmbare Bereiche zwischen Membran und Elektrode oder zwischen Elektrode und bipolarer Platte oder Folie erreicht werden. Dies ist im Besonderen zur Erreichung einer Homogenisierung der Edukt und Reaktionsproduktkonzentration über die gesamte Elektrodenfläche und damit einer Vergleichmäßigung der elektrischen Stromdichteverteilung vorteilhaft. Damit ist das Konzept geeignet, großflächige Zellstapel mit hohen elektrischen Leistungs- und Stromdichten aufzubauen. Das Zellkonzept ermöglicht den Aufbau von Zellstapeln mit neuartigen Membranen, Elektroden und Bipolarplatten bzw. bipolaren Folien und kann somit für eine Reihe von elektrochemischen Zellanordnungen/Wandlern, wie Brennstoffzelle, Elektrolyseur oder Redox-Flow Batterie vorteilhaft eingesetzt werden

Zwischen zwei Zellverbünden, die hydraulisch miteinander verschaltet sind, kann mindestens ein Grundelement (GE-X) oder eine Untereinheit (UE-Z) eingebunden sein, das/die die Eduktsammelkanäle 18 und/oder die Reaktionsproduktsammelkanäle 18 dieser Zellverbünde über jeweils einen Kanal miteinander verbindet, der so gestaltet ist, dass Nebenschlussströme in den Leitungen, in denen ein Edukt / Reaktionsprodukt geführt ist, reduziert sind. Es kann so eine gleichmäßige Volumenstromverteilung über die an- oder durchströmbaren Bereiche erreicht werden. Die Edukt- und/oder Reaktionsproduktsammelkanäle sind jeweils an mindestens eine Zu- und Abführung angeschlossen.

In Grundelementen können weitere Durchbrechungen ausgebildet und angeordnet sein, wobei mindestens eine fluidische Verbindung von einzelnen Halbzellen der Anordnung als Zuführung und mindestens eine fluidische Verbindung von einzelnen Halbzellen als Abführung durch miteinander kommunizierende Durchbrechungen mehrerer Grundelemente ausgebildet sind und damit eine Verteilstruktur gebildet ist, durch die eine gleichmäßige Eduktverteilung innerhalb von einzelnen Halbzellen eines Zellstapels mehrerer übereinander angeordneter elektrochemischer Zellen sowie eine Selbstentleerung eines Fluidpfads und/oder ein Gasaustrag erreichbar ist/sind. Dies ist vorteilhaft, wenn eine Pumpe oder ein Verdichter für die Eduktzufuhr funktionsunfähig wird und der elektrochemische Prozess unterbrochen werden soll.

Außerdem besteht die Möglichkeit mit einer dritten Füllmasse FM-3 eine Oberflächenstruktur zur Ausbildung von Hohlräumen innerhalb einer elektrochemischen Zelle auszubilden, die von Edukt durchströmbar sind, wodurch eine einfache Ausbildung von Kanälen und Flow-Fields erreichbar ist.

In Grundelementen können weitere Bereiche mit bevorzugt Durchbrechungen ausgebildet sein, die mit einer dritten oder vierten Füllmasse FM-3 oder FM-4 eine elektrisch leitende Oberflächenstruktur zur Ausbildung von mit Edukt durchströmbaren Elektroden 3 bilden können. Es können auch weitere Durchbrechungen ausgebildet sein, durch die ein poröser elektrischer Leiter zur Ausbildung einer Elektrode ausgebildet oder darin angeordnet ist.

Damit kann eine Zellarchitektur für elektrochemische Wandler zur Verfügung gestellt werden, die eine Optimierung der elektrischen Leistungsdichte einerseits und die spezifischen Kosten andererseits ermöglicht und eine industrielle Massenfertigung erlaubt.

Nachfolgend soll die Erfindung beispielhaft anhand von Beispielen für die Herstellung einer Redox-Flow-Batterie näher erläutert werden. Zumindest einige hierbei beschriebene Beispiele für Grundelemente und Untereinheiten können aber auch bei anderen Arten elektrochemischer Zellen eingesetzt werden.

Dabei zeigen:
- Figur 1: ein Grundelement für eine Membraneinheit;
- Figur 2: das Grundelement nach Figur 1 mit am äußeren Rand auf- und/oder eingebrachter erster Füllmasse FM-1;
- Figur 3: das Grundelement nach Figur 2 mit aufgelegter ionenleitender Membran;
- Figur 4: ein zweites Grundelement mit erster Füllmasse am äußeren Rand, das auf die Anordnung nach Figur 3 aufgelegt und mit diesem stoffschlüssig verbunden wird und damit die Membraneinheit 1 bildet;
- Figur 5: zeigt in einer Schnittdarstellung, die beiden miteinander verbundenen, die ionenleitende Membran einschließenden Grundelemente nach den Figuren 3 und 4;

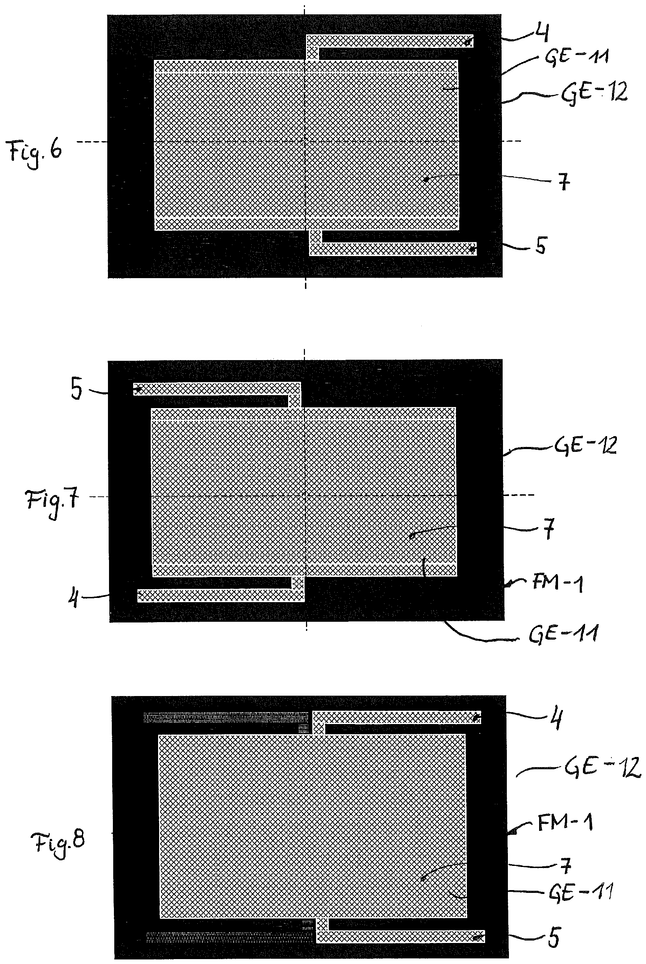

- Figur 6: eine Draufsicht auf ein Grundelement mit Zu- und Abführung sowie einen durchströmbaren Bereich für Elektrolyt;
- Figur 7: eine Draufsicht auf ein um 180° gedreht auf ein Grundelement nach Figur 5 aufsetzbares Grundelement;
- Figur 8: die beiden Grundelemente mit Strömungskanälen nach den Figuren 6 und 7, welche an die Membraneinheit nach Figur 5 angeordnet und mit dieser stoffschlüssig im äußeren Randbereich verbundenen sind;
- Figur 9: eine Schnittdarstellung einer Membraneinheit mit zwei Grundelementen zur Anströmung und Strömungsverteilung nach Figur 6,7;
- Figur 10: eine Draufsicht auf ein Grundelement mit mehreren Durchbrechungen im äußeren Randbereich;
- Figur 11: eine Draufsicht auf ein Grundelement mit mittiger Durchbrechung für die Aufnahme einer Elektrode zur Ausbildung einer für eine Elektroden-Bipolarplatten-Einheit;
- Figur 12: das Grundelement nach Figur 11, das im äußeren Randbereich mit erster Füllmasse FM-1 verfüllt ist;
- Figur 13: das Grundelement nach Figur 12 mit aufgelegter bipolarer Folie welche mit diesem stoffschlüssig verbunden wird;
- Figur 14: eine Draufsicht einer Elektroden-Bipolarfolie-Einheit, bestehend aus der Anordnung auf Figur 13 mit zusätzlich aufgelegten und zum Grundelement und zur bipolaren Folie stoffschlüssige Verbindung, sowie beidseitig eingesetzter Elektrode
- Figur 15: eine Schnittdarstellung durch die Elektroden-Bipolarfolie-Einheit nach Figur 14 mit stoffschlüssig verbundener bipolarer Folie, Elektroden und Grundelementen;
- Figur 16: eine Schnittdarstellung durch eine mit mehreren elektrochemischen Zellen aufgebauter Zellstapel;
- Figur 17: einen Ausschnitt eines solchen Grundelementes mit seiner porösen Struktur, eine mit einer Füllmasse verfüllten Bereich sowie einer Durchbrechung in diesem Bereich;
- Figur 18: ein Grundelement mit seiner porösen Grundstruktur in Zu-und Abfuhrkanälen und einem mittigen Strömungsbereich (GE-11), einem mit einer ersten Füllmasse verfüllten Randbereich mit dichtender Wirkung (GE-12) sowie Durchbrechungen in diesem Bereich;
- Figur 19: ein Grundelement mit einem verfüllten Randbereich mit einer ersten Füllmasse mit dichtender Wirkung sowie einem mit einer zweiten Füllmasse verfüllten mittigen Bereich zur Ausbildung einer Membran;
- Figur 20: ein Grundelement mit einem verfüllten Randbereich mit einer ersten Füllmasse mit dichtender Wirkung sowie einem mit einer dritten Füllmasse verfüllten mittigen Bereich zur Ausbildung einer Elektrode;
- Figur 21: ein Grundelement mit einem verfüllten Randbereich mit einer ersten Füllmasse mit dichtender Wirkung sowie einem mit einer vierten Füllmasse verfüllten mittigen Bereich zur Ausbildung einer bipolaren Platte oder Folie;
- Figur 22: ein Beispiel für die Ausführungsformen GE-17, GE-18, GE-19 eines Grundelementes;
- Figur 23: ein Beispiel für eine integrierte Elektrode (GE-14) mit seitlichen durchströmbaren Randbereichen (GE-11);
- Figur 24: ein Beispiel für ein Grundelement mit einem Sammelkanal und mehrfachen Zu- und Abführkanälen;
- Figur 25: ein Beispiel für ein Grundelement mit mehreren Sammelkanälen und mehrfachen Zu- und Abführkanälen für eine Halbzellenseite, die Sammelkanäle der zweiten Halbzellenseite sind nicht dargestellt;
- Figur 26: ein Beispiel für ein Grundelement mit einer einfachen Anströmung und beispielhaften Ausführungen dieser Flow-Fields in vier Varianten;
- Figur 27: eine Draufsicht einer Ausführungsform einer Membraneinheit;
- Figur 28: eine Schnittdarstellung der Membraneinheit nach Figur 27;
- Figur 29: Eine Schnittansicht einer Elektroden-Bipolare Platte-Einheit mit jeweils zwei Grundelementen nach Figur 12 für die Aufnahme einer Elektrode;
- Figur 30: ein Beispiel einer Untereinheit mit einem Schichtaufbau, der aus Elektrode, Membrane, Elektrode besteht;
- Figur 31: ein Beispiel einer Untereinheit bei der drei Schichten eine Elektrode, eine Membran und eine Elektrode bilden;
- Figur 32: ein Beispiel einer Untereinheit mit fünf Schichten, die eine Diffusionsschicht, eine Elektrode, eine Membran, eine Elektrode und eine Diffusionsschichtbilden;
- Figur 33: ein Beispiel einer Untereinheit in einer Schnittdarstellung mit drei Schichten, nämlich einer Elektrode, einer bipolare Platte/Folie und einer Elektrode; wobei mit einer dritten Füllmasse FM-3 eine Oberflächenstruktur ausgebildet ist, die als Strömungskanal/-kanäle für Edukte/Elektrolyten entlang der Elektrodenoberfläche nutzbar ist;
- Figur 34: eine weitere Variante einer Untereinheit UE-3-6 für einen dreischichtigen Aufbau und
- Figur 35: eine Variante einer Untereinheit UE-3-7 für einen fünfschichtigen Aufbau.

Für die Herstellung einer Membraneinheit 1 können zwei Grundelemente nach Untereinheit UE-1-2 ohne flächige Durchbrechung, einer marktüblichen ionentauscher Membran 2, einer stoffschlüssigen Verbindung von Membran 2 mit beiden Grundelementen gebildet werden.

Zum Aufbau einer Membraneinheit 1 nach UE-1-2 wird als flächiges Gebilde für ein Grundelement GE-11 ein Polyethylen-Gelege mit einer Dicke von 250 µm eingesetzt, das in Figur 1 in einer Draufsicht gezeigt ist. Das Gelege ist mit Fasern oder Fäden gebildet, zwischen denen Frei- oder Hohlräume vorhanden sind.

Auf dieses Polyethylen-Gelege wird mittels Siebdruck eine erste Füllmasse FM-1 aufgetragen, die mittels Schweißverfahren eine stoffschlüssige Verbindung zur Membran und zu weiteren Grundelementen erlaubt. Dies ist mit Figur 2 gezeigt, bei der der äußere Randbereich mit der ersten Füllmasse FM-1 versehen ist. Dabei sind die Frei- oder Hohlräume in diesem Bereich mit der ersten Füllmasse FM-1 verfüllt.

Eine ionenleitfähige Membran 2 wird aufgelegt und stoffschlüssig mit der ersten Füllmasse FM-1 verbunden. Dies ist in Figur 3 gezeigt.

Ein zweites Polyethylen-Gelege, als Grundelement mit erster Füllmasse FM-1 wird oben aufgelegt und ebenfalls mit der Membran 2 und dem ersten Gelege stoffschlüssig verbunden. Somit ist die Membraneinheit 1 fertig gestellt. Alle Kontaktflächen zwischen den Füllmassen FM-1 der Bereiche der Grundelemente GE-12 sowie zur Membran 2 sind hydraulisch dicht und gasdicht. Dies ist in Figuren 4 und 5 gezeigt.

Für die Herstellung einer Membraneinheit 1 mit zusätzlichen Grundelementen zur Fluidversorgung wird zur Realisierung einer definierter Elektrolytan- und abströmung der einzelnen Halbzellen pro Halbzelle jeweils ein weiteres Polyethylen-Gelege als ein Grundelement mit Strömungsbereichen eingesetzt, das eine in der Draufsicht nach Figur 6 dargestellte Gestalt hat. Mit außerdem nicht mit erster Füllmasse FM-1 versehenen Bereichen wurden eine Zuführung 4 und eine Abführung 5 für Edukt und/oder Reaktionsprodukte sowie ein für Edukt durchströmbarer Bereich 7 ausgebildet, wie es beispielsweise bei einem Grundelement gemäß Figur 10 gezeigt ist.

Durch einen symmetrischen Aufbau kann dieses Grundelement für beide Halbzellen eingesetzt werden, indem es um 180° gedreht wird.

Eines dieser so einsetzbaren Grundelemente ist in Figur 6 gezeigt. Entsprechend zeigt Figur 7 ein um 180° gedrehtes Grundelement.
Beide Polyethylen-Gelege als Grundelemente werden auf der Ober- und Unterseite auf die Membraneinheit 1 stoffschlüssig in den Bereichen der Kontaktflächen der verfüllten Bereiche miteinander verbunden, was in Figur 8 gezeigt ist. Es sind die Zu- und Abführungen 4 und 5 sowie ein durchströmbarer Bereich einer Halbzelle so ausgebildet.

In Figur 9 ist eine Schnittansicht der Membraneinheit 1 mit Grundelementen zur Anströmung und Strömungsverteilung für Edukt gezeigt.

Mittels Stanzen werden Durchbrechungen in Grundelementen GE-X ausgebildet, um Sammelkanäle 18, Positionierungshilfen 9 sowie Aufnahmen 10 für eine mechanische Verspannung zur erhalten. Eine mögliche Anordnung dieser Durchbrechungen geht aus Figur 10 hervor.

Für die Herstellung einer Elektroden-Bipolarfolie-Einheit können zwei Grundelemente nach den Untereinheiten UE-2-1 mit flächiger Durchbrechung, eine bipolare Folie aus Kunststoff-Carbon-Composit sowie eine stoffschlüssige Verbindung von Bipolarfolie zu den Grundelementen und zwischen zwei Grundelementen eingesetzt werden.

Zum Aufbau einer Elektroden-Bipolarfolie-Einheit nach UE-2-1 wird als flächiges Gebilde für ein Grundelement GE-16 ein Polyethylen-Gelege mit einer Dicke von 1000 µm eingesetzt, das in der Draufsicht in Figur 11 gezeigt ist.

Auf dieses Polyethylen-Gelege wird mittels Siebdruck eine erste Füllmasse FM-1 aufgetragen, die mittels Schweißverfahren eine stoffschlüssige Verbindung zur bipolaren Folie erlaubt. Dabei sind die Frei- und Hohlräume des Geleges des Grundelements im äußeren Bereich zumindest weitestgehend, bevorzugt vollständig mit der ersten Füllmasse FM-1 verfüllt, wie dies in Figur 12 gezeigt ist.

Eine elektrisch leitende und hydraulisch und pneumatisch dichte bipolare Folie 6 wird aufgelegt und stoffschlüssig mit der ersten Füllmasse FM-1 verbunden (Figur 13).

Ein zweites Polyethylen-Gelege als Grundelement GE-16 mit erster Füllmasse FM-1 wird oben aufgelegt und ebenfalls mit der bipolaren Folie 6 und dem ersten Grundelement stoffschlüssig verbunden. Alle Kontaktflächen zwischen den ersten Füllmassen FM-1 der beiden Grundelemente GE-16 sowie zur bipolaren Folie 6 sind hydraulisch dicht und gasdicht. In die mit den Durchbrechungen entstandene Elektrodenaufnahme werden beidseitig zwei Elektroden 3 mit 1,2 mm Dicke eingebracht.

Somit ist die Elektroden-Bipolarfolie-Einheit fertig gestellt, wie in den Figuren 14 und 15 gezeigt.

Zur Herstellung von Zellstapeln im technischen Maßstab können die Membraneinheit 1 samt Strömungsverteilung und die Elektroden-Bipolarfolie-Einheit 15 abwechselnd gestapelt und stoff- oder kraftschlüssig miteinander verbunden werden. Die Randzellen stellen Halbzellen dar, die an einen Stromsammler 12, 12' elektrisch angeschlossen sind. Über Sammelkanäle werden die Einzelzellen hydraulisch/pneumatisch parallel geschaltet, die an externe elektrische Anschlüsse am Zellstapel münden.

Die folgende Darstellung von Figur 16 zeigt exemplarisch einen Zellstapel mit zwei Einzelzellen. (Die Edukt-/Elektrolytversorgung ist nicht dargestellt). Über die Stromsammler 12, 12' kann dem Zellstapel elektrischer Strom zu- und abgeführt werden.

Eine mechanische Verspannanordnung 13 sorgt für einen zusätzlichen Anpressdruck der Anpressplatten 14 an die Randzellen. Allein oder zusätzlich können weitere Durchbrechungen in übereinander angeordneten Grundelementen einer erfindungsgemäßen Anordnung vorhanden sein, durch die jeweils ein Element als Positionierungshilfe hindurch geführt ist.

## Patentansprüche

1. Anordnung elektrochemischer Zellen, insbesondere für den Einsatz in Redox-Flow-Batterien, bei der mindestens eine elektrochemische Zelle mit mehreren übereinander angeordneten und mit ihren äußeren Randbereichen fluiddicht verbundenen Grundelementen (GE-X), zwei Elektroden (3, 3.1, 3.2), einem Separator oder einer Membran (2, 2.1), jeweils mindestens zwei Zu- und Abführungen (4 und 5) sowie mindestens zwei durchströmbare Bereiche für Edukte, die jeweils in Kontakt mit einer der beiden Elektroden (3, 3.1, 3.2) stehen, gebildet ist,
wobei die Edukte Wasser, Alkohole, wässrige Elektrolyte oder Elektrolyte auf Basis organischer Lösungsmittel oder ionische Flüssigkeiten oder Wasserstoff, flüssige oder gasförmige Kohlenwasserstoffverbindungen, Sauerstoff oder ein Sauerstoff enthaltendes Gasgemisch sind,
***dadurch gekennzeichnet, dass***
die elektrochemischen Zellen mit übereinander angeordneten Grundelementen (GE-X) gebildet sind und die Grundlemente (GE-X) flächige Gebilde sind, die eine Netzstruktur aufweisen oder aus einem porösen Werkstoff gebildet sind, dabei
die elektrochemischen Zellen im äußeren Randbereich ausschließlich mittels Grundelementen (GE-X) und einer ersten Füllmasse (FM-1) fluiddicht verbunden sind, wobei die erste Füllmasse (FM-1) in Hohlräume eingebracht ist, so dass diese zumindest nahezu vollständig ausgefüllt sind, und kein zusätzliches Rahmenelement vorhanden ist, und
bei Grundelementen (GE-X) Bereiche mit mindestens einer Füllmasse (FM-Y) versehen sind, die mit einem Grundelement (GE-X) eine Dichtung, einen Separator oder eine Membran (2, 2.1), eine Elektrode (3, 3.1, 3.2), eine bipolare Platte oder Folie (6, 6.1) ausbilden, wobei
Bereiche ohne Füllmasse (FM-Y) als Abstandshalter fungieren und die in und senkrecht zur Ebene von Grundelementen (GE-X) fluidisch permeabel für die Edukte sind und dadurch definierte Fließwege für die Edukte ausbilden und
Bereiche mit Durchbrechungen vorliegen, die fluidische Zu- und Abführungen (4 und 5) sowie Kanal- und Verteilstrukturen (18) und die von Edukten durchströmbaren Bereiche (7) ausbilden oder
Bereiche mit Durchbrechungen_Aufnahmen für Funktionsmaterialien, wie Separator oder Membran (2, 2.1), durch- oder überströmbare Elektroden (3, 3.1, 3.2) sowie bipolare Platten oder Folien (6, 6.1) oder Funktionselemente darstellen.

2. Anordnung nach Anspruch 1,
***dadurch gekennzeichnet, dass***
Grundelemente (GE-X) flächige Gebilde, mit bevorzugt polymerer Grundstruktur, wie Gelege, Gestricke, Gewebe, Gewirke, Netze und/oder offenporige Werkstoffe sind und dabei der äußere Randbereich mit einer ersten Füllmasse versehen ist, die fluiddicht ist und in den äußeren Randbereichen eine kraftschlüssige und/oder stoffschlüssige Verbindung mit mindestens einem flächig oberhalb oder unterhalb von diesem Grundelement angeordneten weiteren Grundelement und/oder Funktionsmaterialien oder -elementen bildet.

3. Anordnung nach Anspruch 1 oder 2,
***dadurch gekennzeichnet, dass***
ein Grundelement (GE-X) aus einer chemischen Verbindung oder Material gebildet ist, die/das ausgewählt ist aus Thermoplasten, insbesondere Polyethylen (PE), Polyester (PET),Polypropylen (PP), Polystyrol (PS), Polysulfon (PSU), Polyvinylchlorid (PVC), Fluorkunststoff, insbesondere Ethylen-Chlortrifluorethylen (E-CTFE), Ethylen-Tetrafluorethylen(ETFE), Terafluorethylen-Perfluorpropylen (FEP), Polytetrafluorethylen (PTFE), Polyvinylidenfluorid (PVDF), einem Elastomer, Duroplasten, Kohlenstoff-, Graphit-, Graphen-, Glas-, Aramidfasern, Titan, Platin, Stahl und einem Verbund davon.

4. Anordnung nach einem der vorhergehenden Ansprüche,
***dadurch gekennzeichnet, dass***
in Grundelementen (GE-X) weitere Durchbrechungen (18) ausgebildet und angeordnet sind, wobei mindestens eine fluidische Verbindung von einzelnen Halbzellen der Anordnung als Zuführung und mindestens eine fluidische Verbindung von einzelnen Halbzellen als Abführung durch miteinander kommunizierende Durchbrechungen mehrerer Grundelemente ausgebildet sind und damit eine Verteilstruktur gebildet ist, durch die eine gleichmäßige Eduktverteilung innerhalb von einzelnen Halbzellen eines Zellstapels mehrerer übereinander angeordneter elektrochemischer Zellen sowie eine Selbstentleerung eines Fluidpfad und/oder ein Gasaustrag erreichbar ist/sind.

5. Anordnung nach einem der vorhergehenden Ansprüche,
***dadurch gekennzeichnet, dass***
in Grundelementen (GE-X) Bereiche ohne Füllmasse oder einer weiteren Durchbrechung vorliegen, die durch mindestens ein weiteres benachbartes Grundelement und/oder mindestens einen Separator oder eine Membran (2, 2.1) und/oder mindestens eine bipolare Platte oder bipolare Folie (6, 6.1) mindestens einen definierten Fluidpfad als Zuführung von der Verteilstruktur zu einer Elektrode (3, 3.1, 3.2) für ein Edukt bildet und mindestens einen definierten Fluidpfad als Abführung von dieser Elektrode (3, 3.1, 3.2) zur Verteilstruktur bildet und dabei eine Selbstentleerung des Fluidpfads und/oder ein Gasaustrag erreichbar ist/sind.

6. Anordnung nach einem der vorhergehenden Ansprüche,
***dadurch gekennzeichnet, dass***
mindestens ein Grundelement (GE-X) zwischen der Elektrode (3, 3.1, 3.2) und Separator oder Membran (2, 2.1) oder zwischen der bipolaren Platte oder bipolaren Folie (6, 6.1) und der Elektrode (3, 3.1, 3.2) angeordnet ist, das in der Projektionsfläche zu diesem Separator oder dieser Membran (2, 2.1) oder Elektrode (3, 3.1, 3.2) keine Füllmasse enthält und dadurch einen, im Abstand definierten Spalt ausbildet, der für das jeweilige Edukt durchströmbar ist.

7. Anordnung nach einem der vorhergehenden Ansprüche,
***dadurch gekennzeichnet, dass***
mindestens zwei Grundelemente (GE-X), in denen jeweils mindestens eine Zu- und eine Abführung (4 und 5) sowie mit diesen in Verbindung stehenden Durchbrechungen zur Ausbildung von Sammelkanälen (18) sowie mindestens ein für ein Edukt durchströmbarer Bereich (7) ausgebildet sind, und diese beiden Grundelemente (GE-X) um zumindest eine mittlere Achse symmetrisch ausgebildet und um 180° gedreht zueinander angeordnet sind, an einer elektrochemischen Zelle vorhanden sind.

8. Anordnung nach einem der vorhergehenden Ansprüche,
***dadurch gekennzeichnet, dass***
eine erste Füllmasse (FM-1) für die Ausbildung eines fluiddichten äußeren Randbereichs ausgewählt ist aus einem Elastomer, insbesondere Ethylen-Propylen-Terpolymer-Kautschuk (EPDM), Fluor-Polymer (FPM/FKM), Silikon-Kautschuk (SI), aus einem Thermoplast oder einem nur teilvernetzten Kunststoff und/oder
eine zweite Füllmasse (FM-2) für die Ausbildung eines Separators oder einer Membran ausgewählt ist aus Cellulose, Celluloseacetat (CA), Cellulosetriacetat (CTA), Chitin, Cyclodextrin, Polyamid (PA), Polyamidimid (PAI), Polyacrylnitril (PAN), Polybenzimidazol (PBI), Polyester (PES), Polyphenylenoxid (PPO), Polycarbonat (PC), Polyetherimid (PEI), Polyethylenimin (PEI), Polyimid (PI), Polymethylmethacrylat (PMMA), Polypropylen (PP), Polysulfon (PSU), Polyethersulfon (PES), Polyphenylsulfon (PPSU), Polytetrafluorethylen (PTFE), Nafion (sulfoniertes PTFE), Polyvinylidenfluorid (PVDF), Polyetheretherketon (PEEK), sulfonierte Polyetheretherketon (sPEEK), sulfonierte Fluorenylpolyetheretherketone (SFPEEKK), PAES Polyarylethersulfone (PAES), Polyarylenthioether, Polyarylensulfonsäuren, Polyaryletherketone (PAEK), sulfoniertes Polyaryletherketone (sPAEK) fluorierte Polysulfonsäure (PFSA,) Polyvinylpyrrolidon (PVP), Polyvinylalkohol (PVOH), Polydimethylsiloxan (PDMS) und Polyethylenterephthalat (PET), Zeolith, Kohlenstoff, Aluminiumoxid (Al₂O₃), Titandioxid (TiO₂), Zirkonoxid (ZrO₂) und Glas oder einem Gemisch davon und/oder
eine dritte Füllmasse (FM-3) für die Ausbildung von Elektroden ausgewählt ist, aus Gold, Kohlenstoff-, Graphitpartikeln, Kohlenstoff-, Graphitfasern, Fasern auf Cellulose-, Polyacrylnitril-Basis (PAN), carboxy-funktionalisierte CNT (Kohlenstoffnanoröhrchen), MWCNT (mehrwandige Kohlenstoffnanoröhrchen), Graphen, Platin, kohlenstoffgetragene Platinpartikel, Titan, Titan-Oxide, Iridium-, Rutheniumpartikel oder einem Gemisch davon und/oder
eine vierte Füllmasse (FM-4) für die Ausbildung von Bipolarplatten und/oder-folien ausgewählt ist, aus Gold, Kohlenstoff-, Graphitpartikeln, Kohlenstoff-, Graphitfasern, auf Cellulose-, Polyacrylnitril-Basis (PAN), carboxy-funktionalisierte CNT (Kohlenstoffnanoröhrchen), MWCNT (mehrwandige Kohlenstoffnanoröhrchen), Graphen, Platin, kohlenstoffgetragenen Platinpartikeln, Titan, Titan-Oxid, Iridium-, Rutheniumpartikeln und einem Gemisch davon.

9. Anordnung nach einem der vorhergehenden Ansprüche,
***dadurch gekennzeichnet, dass***
eine zweite Füllmasse (FM-2) teilweise in Bereichen eines Grundelements (GE-X) aufgetragen oder in weiteren Durchbrechungen verfüllt ist, wodurch ein(e) in das Grundelement (GE-X) integrierte(r) Separator oder Membran (2.1) ausgebildet ist
und/oder
eine dritte Füllmasse (FM-3) teilweise in Bereichen eines Grundelementes (GE-X) aufgetragen oder in weiteren Durchbrechungen verfüllt ist, wodurch eine in das Grundelement (GE-X) integrierte Elektrode (3.1) ausgebildet ist
und/oder
eine vierte Füllmasse (FM-4) in Bereichen eines Grundelements (GE-X) aufgetragen oder in weiteren Durchbrechungen verfüllt ist, wodurch eine in das Grundelement (GE-X) integrierte bipolare Platte oder bipolare Folie (6.1) ausgebildet ist.

10. Anordnung nach einem der vorhergehenden Ansprüche,
***dadurch gekennzeichnet, dass***
in Grundelementen (GE-X) weitere Bereiche mit bevorzugt Durchbrechungen ausgebildet sind, die mit einer dritten oder vierten Füllmasse (FM-3 oder FM-4) eine elektrisch leitende Oberflächenstruktur zur Ausbildung von mit Edukt durchströmbaren Elektroden (3, 3.1, 3.2) bilden, oder weitere Durchbrechungen ausgebildet sind, durch die ein poröser elektrischer Leiter zur Ausbildung einer Elektrode (3, 3.1, 3.2) ausgebildet oder darin angeordnet ist.

11. Anordnung nach einem der vorhergehenden Ansprüche,
***dadurch gekennzeichnet, dass***
mit einer dritten Füllmasse (FM-3) eine Oberflächenstruktur zur Ausbildung von Hohlräumen innerhalb einer elektrochemischen Zelle ausgebildet ist, die von Edukt durchströmbar sind.

12. Anordnung nach einem der vorhergehenden Ansprüche,
***dadurch gekennzeichnet, dass***
in Grundelementen (GE-X) weitere Bereiche mit Durchbrechungen ausgebildet sind, die mit einer elektrisch leitenden vierten Füllmasse (FM-4) befüllt sind, durch die ein elektrischer Leiter zur elektrisch leitenden Verbindung mehrerer elektrochemischer Zellen ausgebildet oder darin angeordnet ist.

13. Anordnung nach einem der vorhergehenden Ansprüche,
***dadurch gekennzeichnet, dass***
ein Grundelement mit mindestens zwei unterschiedlichen Füllmassen versehen ist, die übereinander und/oder nebeneinander ausgebildet sind und jeweils eine Funktionseinheit bilden, wobei dies die Funktionselemente Separator oder Membran (2, 2.1) mit Elektrode (3, 3.1, 3.2) oder Elektrode (3, 3.1, 3.2) mit bipolarer Platte oder bipolarer Folie (6, 6.1) sind.

14. Anordnung nach einem der vorhergehenden Ansprüche,
***dadurch gekennzeichnet, dass***
ein(e) Separator oder Membran (2) oder ein(e) in ein weiteres Grundelement (GE-X) integrierte(r) Separator oder Membran (2.1) kraft- oder stoffschlüssig fluidisch dicht im äußeren Randbereich zwischen zwei Grundelementen (GE-X) eingebunden ist, wodurch eine Separator- oder Membraneinheit (1) gebildet ist und/oder
eine bipolare Platte oder bipolare Folie (6) oder eine in ein weiteres Grundelement (GE-X) integrierte bipolare Platte oder bipolare Folie (6.1) kraft- oder stoffschlüssig fluidisch dicht im äußeren Randbereich zwischen mindestens zwei Grundelementen (GE-X) oder zwischen mindestens zwei weiteren Grundelementen (GE-X) mit integrierter Elektrode (3.1) eingebunden ist und hierdurch eine Elektroden-Bipolarplatten-Einheit (15) gebildet ist, wobei der elektrische Kontakt zwischen Elektrode (3.1) und bipolarer Platte oder bipolarer Folie (6.1) kraft- und/oder stoffschlüssig hergestellt ist
und/oder
ein Separator oder eine Membran (2) oder ein(e) in ein weiteres Grundelement (GE-X) integrierte(r) Separator oder Membran (2.1) kraft- oder stoffschlüssig fluidisch dicht im äußeren Randbereich zwischen mindestens zwei Elektroden (3) oder zwei weiteren Grundelementen (GE-X) mit integrierter Elektrode (3.1) eingebunden ist und hierdurch eine Separator- oder Membran-Elektroden-Einheit gebildet ist.

15. Anordnung nach einem der vorhergehenden Ansprüche,
***dadurch gekennzeichnet, dass***
mindestens eine Separator- oder Membraneinheit (1) mit mindestens zwei Grundelemente (GE-X), die jeweils mindestens einer Zu- und einer Abführung (4 und 5) sowie mit diesen in Verbindung stehenden Durchbrechungen zur Ausbildung von Sammelkanälen (18) sowie mindestens ein für ein Edukt durchströmbarer Bereich (7) aufweisen und mindestens eine Elektroden-Bipolarplatten-Einheit (15) einen hydraulisch dichten Verbund bilden, und dabei die Grundelemente (GE-X) die Separator- oder Membraneinheit (1) beidseitig einfassen und die Elektroden-Bipolarplatten-Einheit (15) direkt darüber angeordnet und mit dieser kraft- oder stoffschlüssig verbunden ist, so dass eine Separator- oder Membran-Elektroden-Bipolarplatten-Einheit gebildet ist.

16. Anordnung nach einem der vorhergehenden Ansprüche,
***dadurch gekennzeichnet, dass***
mehrere einzelne elektrochemische Zellen elektrisch in Reihe und hydraulisch/pneumatisch parallel geschaltet sind
und/oder
mit mehreren einzelnen elektrochemischen Zellen ein Zellverbund gebildet ist, dessen zwei außen angeordnete elektrochemische Zellen mit einem Stromsammler (12, 12') und jeweils zwei Sammelkanälen (18) für die Zu- und Abführung (4 und 5) des Eduktes und/oder Reaktionsproduktes abschließen.

17. Anordnung nach einem der vorhergehenden Ansprüche,
***dadurch gekennzeichnet, dass***
zwischen zwei Zellverbünden, die hydraulisch miteinander verschaltet sind, ein Grundelement (GE-X) oder eine Untereinheit (UE-Z) eingebunden ist, das/die die Sammelkanäle (18) für Edukt und/oder Reaktionsprodukte dieser Zellverbünde über jeweils einen Kanal miteinander verbindet, der so gestaltet ist, dass Nebenschlussströme in den Leitungen, in denen ein Edukt / Reaktionsprodukt geführt ist, reduziert sind.

18. Anordnung nach einem der vorhergehenden Ansprüche,
***dadurch gekennzeichnet, dass***
in Grundelementen (GE-X) weitere Durchbrechungen (10) ausgebildet sind, die so ausgebildet und angeordnet sind, dass jeweils ein Element einer mechanischen Spannanordnung (13, 14) durch miteinander kommunizierende Durchbrechungen (10) geführt ist und mit den Elementen einer Spannanordnung (13, 14) mehrere elektrochemische Zellen stoff-, kraft- und formschlüssig miteinander verbunden sind.

19. Anordnung nach einem der vorhergehenden Ansprüche,
***dadurch gekennzeichnet, dass***
in Grundelementen (GE-X) weitere Durchbrechungen (9) ausgebildet sind, die so ausgebildet und angeordnet sind, dass jeweils ein Element einer Positionierungshilfe durch miteinander kommunizierenden Durchbrechungen (9) geführt ist und mit den Elementen einer Positionierungshilfe für mehrere elektrochemische Zellen passgenau miteinander gestapelt, verpresst und/oder verbunden und verspannt sind.

## Claims

1. An arrangement of electrochemical cells, in particular for use in redox flow batteries, in which at least one electrochemical cell is formed having a plurality of base elements (GE-X) arranged above one another and connected in a fluid-tight manner at their outer marginal regions; two electrodes (3, 3.1, 3.2); a separator or a membrane (2, 2.1), two respective inlets and outlets (4 and 5); and at least two regions for reactants hat can be flowed through and that are each in contact with one of the two electrodes (3, 3.1, 3.2), wherein
the reactants are water, alcohols, aqueous electrolytes or electrolytes on a basis of organic solvents or ionic liquids or hydrogen, liquid or gaseous hydrocarbon compounds, oxygen or a gas mixture including oxygen,
***characterized in that***
the electrochemical cells are formed with base elements (GE-X) arranged above one another and the base elements (GE-X) are planar structures that have a net structure or are formed from a porous material, with
the electrochemical cells being connected in a fluid-tight manner in the outer marginal region exclusively by means of base elements (GE-X) and a first filler material (FM-1), with the first filler material (FM-1) being introduced into hollow spaces such that they are filled at least almost completely and no additional frame element is present; and
regions having at least one filler material (FM-Y) being provided in base elements (GE-X), said regions forming with a base element (GE-X) a seal, a separator or a membrane (2, 2.1), an electrode (3, 3.1, 3.2), a bipolar plate or a film (6, 6.1); with
regions without filler material (FM-Y) acting as spacers and being fluidically permeable for the reactants in and perpendicular to the plane of base elements (GE-X) and thereby forming defined flow paths for the reactants; and
regions having apertures being present that form fluidic inlets and outlets (4 and 5) as well as passage and distribution structures (18) and that form regions (7) that can be flowed through by reactants; or
regions having apertures representing receptacles for functional materials such as a separator or membrane (2, 2.1), electrodes (3, 3.1, 3.2) that can be flowed through or over, and bipolar plates or films (6, 6.1) or functional elements.

2. An arrangement in accordance with claim 1,
***characterized in that***
base elements (GE-X) are planar structures having a preferably polymeric basic structure such as non-crimp fabrics, knitted fabrics, woven fabrics, crocheted fabrics, nets and/or open-pore materials; and **in that** in this process the outer marginal region is provided with a first filler material that is fluid-tight and forms, in the outer marginal regions, a force-fitting connection and/or a connection with material continuity to at least one further base element arranged areally above or beneath this base element and/or functional materials or functional elements.

3. An arrangement in accordance with claim 1 or claim 2,
***characterized in that***
a base element (GE-X) is formed from a chemical compound or material that is selected from thermoplastics, in particular polyethylene (PE), polyester (PET), polypropylene (PP), polystyrene (PS), polysulfone (PSU), polyvinyl chloride (PVC), fluorine plastic, in particular ethylene chlorotrifluoroethylene (ECTFE), ethylene tetrafluoroethylene (ETFE), tetrafluoroethylene perfluoroproplyene (FEP), polytetrafluoroethylene (PTFE), polyvinyl fluoride (PVDF), an elastomer, thermosetting plastics, fibers of carbon/graphite/graphene/glass/aramide, titanium, platinum, steel, and a composite thereof.

4. An arrangement in accordance with one of the preceding claims,
***characterized in that***
further apertures (18) are formed and arranged in base elements (GE-X), with at least one fluidic connection of individual half-cells of the arrangement being formed as an inlet and at least one fluidic connection of individual half-cells being formed as an outlet through mutually communicating apertures of a plurality of base elements; and **in that** a distribution structure is thus formed by which a uniform reactant distribution within individual half-cells of a cell stack of a plurality of electrochemical cells arranged above one another and a self-emptying of a fluid path and/or a gas discharge can be achieved.

5. An arrangement in accordance with one of the preceding claims,
***characterized in that***
regions are present in base elements (GE-X) that have no filler material or no further aperture that forms at least one defined fluid path as an inlet from the distribution structure to an electrode (3, 3.1, 3.2) for a reactant by at least one further base element and/or by at least one separator or a membrane (2, 2.1), and/or by at least one bipolar plate or bipolar film (6, 6.1) and forms at least one defined fluid path as an outfeed from this electrode (3, 3.1, 3.2) to the distribution structure and in so doing a self-emptying of the fluid path and/or a gas discharge can be achieved.

6. An arrangement in accordance with one of the preceding claims,
***characterized in that***
at least one base element (GE-X) is arranged between the electrode (3, 3.1, 3.2) and the separator or membrane (2, 2.1) or between the bipolar plate or bipolar film (6, 6.1) and the electrode (3, 3.1, 3.2) and does not include any filler material in the projection surface relative to this separator or this membrane (2, 2.1) or electrode (3, 3.1, 3.2) and thereby forms a gap that is defined at a spacing and that can be flowed through by the respective reactant.

7. An arrangement in accordance with one of the preceding claims,
***characterized in that***
at least two base elements (GE-X) are present at an electrochemical cell, in which base elements at least one respective inlet and outlet (4 and 5) as well as apertures connected thereto for forming collection passages (18) and at least one region (7) that can be flowed through by a reactant are formed and these two base elements (GE-X) are formed symmetrically around at least one center axis and are arranged rotated by 180° with respect to one another.

8. An arrangement in accordance with one of the preceding claims,
***characterized in that***
a first filler material (FM-1) for the formation of a fluid-tight outer marginal region is selected from an elastomer, in particular ethylene propylene terpolymer rubber (EPDM), fluoropolymer (FPM/FKM), silicone rubber (SI), from a thermoplastic or from an only partly cross-linked plastic; and/or
a second filler material (FM-2) for the formation of a separator or of a membrane is selected from cellulose, cellulose acetate (CA), cellulose triacetate (CTA), chitin, cyclodextrin, polyamide (PA), polyamide-imide (PAI), polyacrylonitrile (PAN), polybenzimidazole (PBI), polyester (PES), polyphenylene oxide (PPO), polycarbonate (PC), polyetherimide (PEI), polyethyleneimine (PEI), polyimide (PI), polymethylmethacrylate (PMMA), polypropylene (PP), polysulfone (PSU), polyethersulfone (PES), polyphenylsulfone (PPSU), polytetrafluoroethylene (PTFE), Nafion (sulfonated PTFE), polvinylidene fluoride (PVDF), polyetheretherketone (PEEK), sulfonated polyetheretherketone (SPEEK), sulfonated fluoroenyl-containing polyetheretherketones (SFPEEKK), PAES polyaryl ether sulfones (PAES), polyarylene thioethers, polyarylene sulfonic acids, polyaryl etherketones (PAEK), sulfonated polyaryl etherketones (SPAEK), fluorinated polyfulfonice acid (PFSA), polyvinyl pyrrolidone (PVP), polyvinyl alcohol (PVOH), polydimethylsiloxane (PDMS), and polyethylene terephthalate (PET), zeolite, carbon, aluminum oxide (Al₂O₃), titanium dioxide (TiO₂), zirconium oxide (ZrO₂), and glass or a mixture thereof; and/or
a third filler material (FM-3) for the formation of electrodes is selected from gold, carbon particles, graphite particles, carbon fibers, graphite fibers, fibers on a base of cellulose, polyacrylonitrile (PAN), carboxy functionalized CNTs (carbon nanotubes), MWCNT (multi-walled carbon nanotubes), graphene, platinum, carbon-supported platinum particles, titanium, titanium oxides, iridium particles, ruthenium particles, or a mixture thereof; and/or
a fourth filler material (FM-4) for the formation of bipolar plates and/or bipolar films is selected from gold, carbon particles, graphite particles, carbon fibers, graphite fibers, fibers on a base of cellulose, polyacrylonitrile (PAN), carboxy functionalized CNTs (carbon nanotubes), MWCNT (multi-walled carbon nanotubes), graphene, platinum, carbon-supported platinum particles, titanium, titanium oxide, iridium particles, ruthenium particles, or a mixture thereof.

9. An arrangement in accordance with one of the preceding claims,
***characterized in that***
a second filler material (FM-2) is applied in part in regions of a base element (GE-X) or is filled in further apertures, whereby a separator or membrane (2.1) integrated into the base element (GE-X) is formed;
and/or
a third filler material (FM-3) is applied in part in regions of a base element (GE-X) or is filled in further apertures, whereby an electrode (3.1) integrated into the base element (GE-X) is formed; and/or
a fourth filler material (FM-4) is applied in regions of a base element (GE-X) or is filled in further apertures, whereby a bipolar plate or a bipolar film (6.1) integrated into the base element (GE-X) is formed.

10. An arrangement in accordance with one of the preceding claims,
***characterized in that***
further regions preferably having apertures are formed in base elements (GE-X), said apertures forming together with a third or fourth filler material (FM-3 or FM-4) an electrically conductive surface structure for forming electrodes (3, 3.1, 3.2) flowable through by reactant; or **in that** further apertures are formed by which a porous electric conductor is formed or is arranged therein for forming an electrode (3, 3.1, 3.2).

11. An arrangement in accordance with one of the preceding claims,
***characterized in that***
a surface structure is formed with a third filler material (FM-3) for forming hollow spaces within an electrochemical cell that can be flowed through by reactant.

12. An arrangement in accordance with one of the preceding claims,
***characterized in that***
further regions having apertures are formed in base elements (GE-X) that are filled with an electrically conductive fourth filler material (FM-4) by which an electric conductor is formed or is arranged therein for the electrically conductive connection of a plurality of electrochemical cells.

13. An arrangement in accordance with one of the preceding claims,
***characterized in that***
a base element is provided with at least two different filler materials that are formed above one another and/or next to one another and each form a functional unit, with them being the functional elements of separator or membrane (2, 2.1) with an electrode (3, 3.1, 3.2) or an electrode (3, 3.1, 3.2) having a bipolar plate or a bipolar film (6, 6.1).

14. An arrangement in accordance with one of the preceding claims,
***characterized in that***
a separator or a membrane (2) or a separator or a membrane (2.1) integrated into a further base element (GE-X) is integrated in a force-fitting manner or with material continuity in a fluidically leaktight manner in the outer marginal region between two base elements (GE-X), whereby a separator or membrane unit (1) is formed;
and/or
a bipolar plate or a bipolar film (6) or a bipolar plate or a bipolar film (6.1) integrated into a further base element (GE-X is integrated in a force-fitting manner or with material continuity in a fluidically leaktight manner in the outer marginal region between at least two base elements (GE-X) or between at least two further base elements (GE-X) having an integrated electrode (3.1) and hereby an electrode-bipolar plate unit (15) is formed, with the electrical contact between the electrode (3.1) and the bipolar plate or bipolar film (6.1) being established in a force-fitting manner and/or with material continuity;
and/or
a separator or a membrane (2) or a separator or a membrane (2.1) integrated in a further base element (GE-X) is integrated in a force-fitting manner or with material continuity in a fluidically leaktight manner in the outer marginal region between at least two electrodes (3) or two further base elements (GE-X) having an integrated electrode (3.1) and hereby a separator-electrode unit or membrane-electrode unit is formed.

15. An arrangement in accordance with one of the preceding claims,
***characterized in that***
at least one separator or membrane unit (1) having at least two base elements (GE-X) that each have at least one inlet and one outlet (4 and 5) as well as apertures connected thereto for forming collection passage (18) as well as at least one region (7) which is flowable through by a reactant and at least one electrode-bipolar plate unit (15) forms an hydraulically leaktight composite, and in so doing the base elements (GE-X) enclose the separator or membrane unit (1) at both sides and the electrode-bipolar plate unit (15) is arranged directly thereabove and is connected thereto in a force-fitting manner or with material continuity so that a separator- or membrane-electrode bipolar plate unit is formed.

16. An arrangement in accordance with one of the preceding claims,
***characterized in that***
a plurality of individual electrochemical cells are connected electrically in series and hydraulically/pneumatically in parallel;
and/or
a cell composite is formed with a plurality of individual electrochemical cells, with two outwardly arranged electrochemical cells of said cell composite terminating with an accumulator (12,12') and two respective collection passages (18) for the inlet and outlet (4 and 5) of the reactant and/or reaction product.

17. An arrangement in accordance with one of the preceding claims,
***characterized in that***
a base element (GE-X) or a sub-unit (UE-Z) is integrated between two cell composites that are hydraulically connected to one another, said base element or sub-unit connecting the collection passages (18) for reactant and/or for reaction products of these cell composites to one another via a respective passage that is designed such that shunt currents in the lines in which a reactant/reaction product is conducted are reduced.

18. An arrangement in accordance with one of the preceding claims,
***characterized in that***
further apertures (10) are formed in base elements (GE-X) and are configured and arranged such that a respective element of a mechanical clamping arrangement (13, 14) is guided by mutually communicating apertures (10) and a plurality of electrochemical cells are connected with material continuity, in a force-fitting and shape-matched manner to one another by the elements of a clamping arrangement (13,14).

19. An arrangement in accordance with one of the preceding claims,
***characterized in that***
further apertures (9) are formed in base elements (GE-X) and are configured and arranged such that a respective element of a positioning aid is guided through mutually communicating apertures (9) and are stacked, pressed and/or connected and clamped with an exact fit to one another by the elements of a positioning aid for a plurality of electrochemical cells.

## Revendications

1. Arrangement de cellules électrochimiques, en particulier pour une utilisation dans des batteries à flux circulant, dans lequel sont formés au moins une cellule électrochimique comportant plusieurs éléments de base (GE-X), disposés les uns au-dessus des autres et reliés d'une manière étanche aux fluides par leurs bords marginaux extérieurs, deux électrodes (3, 3.1, 3.2), un séparateur ou une membrane (2, 2.1), chacune comprenant au moins deux amenées et deux évacuations (4 et 5), ainsi qu'au moins deux zones pouvant être traversées par des matières de départ, dont chacune est en contact avec l'une des deux électrodes (3, 3.1, 3.2),
dans lequel les matières de départ sont l'eau, les alcools, les électrolytes aqueux ou les électrolytes à base de solvants organiques ou les liquides ioniques ou l'hydrogène, les composés hydrocarbonés liquides ou gazeux, l'oxygène, ou un mélange gazeux contenant de l'oxygène,
**caractérisé en ce que**
les cellules électrochimiques sont formées avec des éléments de base (GE-X) disposés les uns au-dessus des autres, et les éléments de base (GE-X) sont des structures bidimensionnelles qui présentent une structure réticulée ou sont formées d'un matériau poreux,
les cellules électrochimiques étant, dans la zone marginale extérieure, reliées d'une manière étanche aux fluides, exclusivement à l'aide d'éléments de base (GE-X) et d'une première masse de remplissage (FM-1), la première masse de remplissage (FM-1) étant introduite dans des cavités, de telle sorte que ces dernières soient au moins approximativement complètement remplies, aucun élément supplémentaire formant cadre n'étant présent, et
dans les éléments de base (GE-X) sont prévues des zones comprenant au moins une masse de remplissage (FM-Y), qui avec un élément de base (GE-X) constituent une étanchéité, un séparateur ou une membrane (2, 2.1), une électrode (3, 3.1, 3.2), une plaque ou une feuille bipolaire (6, 6.1),
des zones sans masse de remplissage (FM-Y) jouant le rôle d'entretoises, et, dans le plan et perpendiculairement au plan des éléments de base (GE-X), étant sous forme fluide perméables aux matières de départ, et formant de ce fait des trajectoires d'écoulement définies pour les matières de départ, et
les zones présentant des percées, qui constituent des amenées et des évacuations (4 et 5) pour les fluides, ainsi que des structures de canal et de répartition (18), et les zones (7) pouvant être traversées par les matières de départ, ou
les zones comportant des percées représentant des logements pour des matériaux fonctionnels tels qu'un séparateur ou une membrane (2, 2.1), des électrodes (3, 3.1, 3.2) pouvant être traversées ou surmontées par un fluide, ainsi que des plaques ou feuilles bipolaires (6, 6.1) ou des éléments fonctionnels.

2. Arrangement selon la revendication 1,
**caractérisé en ce que**
les éléments de base (GE-X) sont des structures bidimensionnelles, ayant de préférence une structure de base polymère, telles que des grilles, des articles tricotés, des tissus, des articles maille, des filets et/ou des matériaux à alvéoles ouverts, et la zone marginale extérieure étant pourvue d'une première masse de remplissage, qui est étanche aux fluides et qui, dans les zones marginales extérieures, forme une liaison dynamique et/ou avec correspondance de matière, avec au moins un élément de base, et/ou des matériaux ou éléments fonctionnels, supplémentaires, disposés en pleine surface au-dessus ou en-dessous de cet élément de base.

3. Arrangement selon la revendication 1 ou 2,
**caractérisé en ce que**
un élément de base (GE-X) est formé à partir d'un composé chimique ou d'un matériau qui est choisi parmi les thermoplastiques, en particulier le polyéthylène (PE), le polyester (PET), le polypropylène (PP), le polystyrène (PS), la polysulfone (PSU), le poly(chlorure de vinyle) (PVC), un plastique fluoré, en particulier l'éthylène-chlorotrifluoréthylène (E-CTFE), l'éthylène-tétrafluoréthylène (ETFE), le tétrafluoréthylène-perfluoropropylène (FEP), le polytétrafluoréthylène (PTFE), le poly(fluorure de vinylidène) (PVDF), un élastomère, des thermodurcissables, des fibres de carbone, de graphite, de graphène, de verre, aramides, le titane, le platine, l'acier et un composite de ceux-ci.

4. Arrangement selon l'une des revendications précédentes,
**caractérisé en ce que**
des percées supplémentaires (18) sont formées et disposées dans les éléments de base (GE-X), au moins une liaison fluidique de demi-cellules individuelles de l'arrangement étant réalisée en tant qu'amenée et au moins une liaison fluidique de demi-cellules individuelles étant réalisée en tant qu'évacuation, par des percées communiquant les unes avec les autres de plusieurs éléments de base, avec de ce fait formation d'une structure de répartition, grâce à laquelle il est possible de réaliser une répartition uniforme des matières de départ à l'intérieur de demi-cellules individuelles d'un empilement de cellules de plusieurs cellules électrochimiques disposées les unes au-dessus des autres, ainsi qu'une vidange automatique d'un chemin de fluide, et/ou une sortie des gaz.

5. Arrangement selon l'une des revendications précédentes,
**caractérisé en ce que**
on a dans les éléments de base (GE-X) des zones sans masse de remplissage ou sans percée supplémentaire, qui grâce à au moins un élément de base voisin supplémentaire et/ou à au moins un séparateur et/ou une membrane (2, 2.1), et/ou à au moins une plaque bipolaire ou une feuille bipolaire (6, 6.1), forment au moins un chemin de fluide défini, en tant qu'amenée allant de la structure de répartition à une électrode (3, 3.1, 3.2), et forment au moins un chemin de fluide défini, en tant qu'évacuation allant de cette électrode (3, 3.1, 3.2) à la structure de répartition, ce qui permet de réaliser une vidange automatique du chemin de fluide et/ou une sortie des gaz.

6. Arrangement selon l'une des revendications précédentes,
**caractérisé en ce que**
au moins un élément de base (GE-X) est disposé entre les électrodes (3, 3.1, 3.2) et le séparateur ou la membrane (2, 2.1) ou entre la plaque bipolaire ou la feuille bipolaire (6, 6.1) et l'électrode (3, 3.1, 3.2), élément de base qui, dans la surface en projection de ce séparateur ou de cette membrane (2, 2.1) ou de cette électrode (3, 3.1, 3.2), ne contient pas de masse de remplissage, et de ce fait forme une fente, définie à une certaine distance, qui peut être traversée par la matière de départ considérée.

7. Arrangement selon l'une des revendications précédentes,
**caractérisé en ce que**
sont présents dans une cellule électrochimique au moins deux éléments de base (GE-X), dans chacun desquels sont configurées au moins une amenée et une évacuation (4 et 5), ainsi que des percées reliées à ces dernières, pour constituer des canaux collecteurs (18), ainsi qu'au moins une zone (7) pouvant être traversée par une matière de départ, et ces deux éléments de base (GE-X) étant configurés symétriquement par rapport à au moins un axe central et étant disposés après avoir tourné de 180° l'un par rapport à l'autre.

8. Arrangement selon l'une des revendications précédentes,
**caractérisé en ce que**
une première masse de remplissage (FM-1) destinée à réaliser une zone marginale extérieure étanche aux fluides est choisie parmi un élastomère, en particulier un caoutchouc éthylène-propylène-terpolymère (EPDM), un polymère fluoré (FPM/FKM), un caoutchouc silicone (SI), parmi un thermoplastique ou un matériau plastique présentant seulement une réticulation partielle, et/ou
une deuxième masse de remplissage (FM-2) destinée à la réalisation d'un séparateur ou d'une membrane est choisie parmi la cellulose, l'acétate de cellulose (CA), le triacétate de cellulose (CTA), la chitine, la cyclodextrine, le polyamide (PA), le polyamide-imide (PAI), le polyacrylonitrile (PAN), le polybenzimidazole (PBI), le polyester (PES), le poly(oxyde de phénylène) (PPO), le polycarbonate (PC), le polyétherimide (PEI), la polyéthylène-imine (PEI), le polyimide (PI), le poly(méthacrylate de méthyle) (PMMA), le polypropylène (PP), la polysulfone (PSU), la polyéthersulfone (PES), la polyphénylsulfone (PPSU), le polytétrafluoréthylène (PTFE), le Nafion (PTFE sulfoné), le poly(fluorure de vinylidène) (PVDF), la polyétheréthercétone (PEEK), la polyétheréthercétone sulfonée (sPEEK), les fluorénylpolyétheréthercétones sulfonées (SFPEEKK), le PAES, les polyaryléthersulfones (PAES), le polyarylènethioéther, les acides polyarylènesulfoniques, les polyaryléthercétones (PAEK), les polyaryléthercétones sulfonées (sPAEK), les poly(acides sulfoniques) fluorés (PFSA), la polyvinylpyrrolidone (PVP), le poly(alcool vinylique) (PVOH), le polydiméthylsiloxane (PDMS) et le poly(téréphtalate d'éthylène) (PET), la zéolite, le carbone, l'oxyde d'aluminium (Al₂O₃), le dioxyde de titane (TiO₂), l'oxyde de zirconium (ZrO₂) et le verre, ou un mélange de ceux-ci, et/ou
une troisième masse de remplissage (FM-3), destinée à réaliser des électrodes, et choisie parmi l'or, les particules de carbone, les particules de graphite, les fibres de carbone, les fibres de graphite, les fibres à base de cellulose, à base de polyacrylonitrile (PAN), les CNT (nanotubes de carbone) à fonctionnalité carboxy, les MWCNT (nanotubes de carbone multi-parois), le graphène, le platine, les particules de platine sur support de carbone, le titane, les oxydes de titane, les particules d'iridium, les particules de ruthénium, ou un mélange de ceux-ci, et/ou
une quatrième masse de remplissage (FM-4) destinée à la réalisation de plaques et/ou de feuilles bipolaires est choisie parmi l'or, les particules de carbone, les particules de graphite, les fibres de carbone, les fibres de graphite, à base de cellulose, à base d'acrylonitrile (PAN), les CNT (nanotubes de carbone) à fonctionnalité carboxy, les MWCNT (nanotubes de carbone multi-parois), le graphène, le platine, les particules de platine sur support de carbone, le titane, l'oxyde de titane, les particules d'iridium, les particules de ruthénium et un mélange de ceux-ci.

9. Arrangement selon l'une des revendications précédentes,
**caractérisé en ce que**
une deuxième masse de remplissage (FM-2) est appliquée partiellement dans des zones d'un élément de base (GE-X) ou remplit des percées supplémentaires, ce qui réalise un séparateur ou une membrane (2.1) intégré dans l'élément de base (GE-X),
et/ou
une troisième masse de remplissage (FM-3) est appliquée partiellement dans des zones d'un élément de base (GE-X) ou remplit des percées supplémentaires, ce qui réalise une électrode (3.1) intégrée dans l'élément de base (GE-X),
et/ou
une quatrième masse de remplissage (FM-4) est appliquée dans des zones d'un élément de base (GE-X) ou remplit des percées supplémentaires, ce qui réalise une plaque bipolaire ou une feuille bipolaire (6.1) intégrée dans l'élément de base (GE-X).

10. Arrangement selon l'une des revendications précédentes
**caractérisé en ce que**
des zones supplémentaires, comportant de préférence des percées, sont réalisées dans les éléments de base (GE-X), zones qui, avec une troisième ou une quatrième masse de remplissage (FM-3 ou FM-4), forment une structure superficielle conductrice de l'électricité, destinée à réaliser des électrodes (3, 3.1, 3.2) pouvant être traversées par une matière de départ, ou des percées supplémentaires sont réalisées, par lesquelles un conducteur électrique poreux est réalisé pour réaliser une électrode (3, 3.1, 3.2), ou y est disposé.

11. Arrangement selon l'une des revendications précédentes,
**caractérisé en ce que**
une troisième masse de remplissage (FM-3) réalise une structure superficielle destinée à la réalisation de cavités à l'intérieur d'une cellule électrochimique, qui peuvent être traversées par une matière de départ.

12. Arrangement selon l'une des revendications précédentes,
**caractérisé en ce que**,
dans les éléments de base (GE-X), sont réalisées des zones supplémentaires comprenant des percées, qui sont remplies d'une quatrième masse de remplissage (FM-4) conductrice de l'électricité, par laquelle un conducteur électrique, destiné à une liaison conductrice de l'électricité de plusieurs cellules électrochimiques, est réalisé, ou y est disposé.

13. Arrangement selon l'une des revendications précédentes,
**caractérisé en ce que**
est prévu un élément de base comportant au moins deux masses de remplissage différentes, qui sont réalisées l'une au-dessus de l'autre et/ou l'une à côté de l'autre, et forment chacune une unité fonctionnelle, représentant les éléments fonctionnels séparateur ou membrane (2, 2.1) avec l'électrode (3, 3.1, 3.2) ou l'électrode (3, 3.1, 3.2) avec la plaque bipolaire ou la feuille bipolaire (6, 6.1).

14. Arrangement selon l'une des revendications précédentes,
**caractérisé en ce que**
un séparateur ou une membrane (2), ou un séparateur ou une membrane (2.1) intégré dans un élément de base supplémentaire (GE-X) est inséré, avec liaison dynamique ou avec correspondance de matière, d'une manière étanche aux fluides, dans la zone marginale extérieure entre deux éléments de base (GE-X), ce qui forme une unité de séparateur ou de membrane (1), et/ou
une plaque bipolaire ou une feuille bipolaire (6), ou une plaque bipolaire ou une feuille bipolaire (6.1) intégrée dans un élément de base supplémentaire (GE-X), est insérée, par une liaison dynamique ou avec correspondance de matière, d'une manière étanche aux fluides, dans la zone marginale extérieure entre au moins deux éléments de base (GE-X) ou entre au moins deux éléments de base supplémentaires (GE-X) comportant une électrode intégrée (3.1), ce qui forme une unité d'électrode-plaque bipolaire (15), ce grâce à quoi le contact électrique entre l'électrode (3.1) et la plaque bipolaire ou la feuille bipolaire (6.1) est réalisé par une liaison dynamique et/ou avec correspondance de matière,
et/ou
un séparateur ou une membrane (2), ou un séparateur ou une membrane (2.1) intégré dans un élément de base supplémentaire (GE-X) est inséré par une liaison dynamique ou avec correspondance de matière, d'une manière étanche aux fluides, dans la zone marginale extérieure entre au moins deux électrodes (3) ou entre deux éléments de base supplémentaires (GE-X) comportant une électrode intégrée (3.1), ce qui forme une unité séparateur-électrode ou membrane-électrode.

15. Arrangement selon l'une des revendications précédentes,
**caractérisé en ce que**
une unité de séparateur ou de membrane (1), comportant au moins deux éléments de base (GE-X), qui chacun présentent au moins une amenée et une évacuation (4 et 5), ainsi que des percées reliées à celles-ci, pour réaliser des canaux collecteurs (18), ainsi qu'au moins une zone (7) pouvant être traversée par une matière de départ, et au moins une unité électrode-plaque bipolaire (15), forment un ensemble hydrauliquement étanche, ce à l'occasion de quoi les éléments de base (GE-X) entourent des deux côtés l'unité de séparateur ou de membrane (1), et l'unité d'électrode-plaque bipolaire (15) est disposée directement par-dessus et y est assemblée par une liaison dynamique ou avec correspondance de matière, de façon à former une unité de séparateur ou de membrane-électrode-plaque bipolaire.

16. Arrangement selon l'une des revendications précédentes,
**caractérisé en ce que**
plusieurs cellules électrochimiques individuelles sont montées électriquement en série ou hydrauliquement/pneumatiquement en parallèle,
et/ou
plusieurs cellules électrochimiques individuelles forment un assemblage de cellules, que deux cellules électrochimiques disposées à l'extérieur délimitent, avec un collecteur de courant (12, 12'), chacune ayant deux canaux collecteurs (18) pour l'amenée et l'évacuation (4 et 5) de la matière de départ et/ou du produit de la réaction.

17. Arrangement selon l'une des revendications précédentes,
**caractérisé en ce que**
entre deux assemblages de cellules, qui sont hydrauliquement reliés l'un à l'autre, est inséré un élément de base (GE-X) ou une sous-unité (UE-Z), qui relie l'un à l'autre les canaux collecteurs (18) pour la matière de départ et/ou le produit de la réaction de ces assemblages de cellules, par l'intermédiaire d'un canal, qui est configuré de telle sorte que soient réduits les courants dérivés passant dans les conduites dans lesquelles passe une matière de départ/un produit de la réaction.

18. Arrangement selon l'une des revendications précédentes,
**caractérisé en ce que**
dans les éléments de base (GE-X) sont réalisées des percées supplémentaires (10), qui sont réalisées et disposées de telle sorte qu'un élément d'un arrangement de serrage mécanique (13, 14) passe par les percées (10), qui communiquent les unes avec les autres, et plusieurs cellules électrochimiques sont reliées les unes aux autres par une liaison avec correspondance de matière, dynamique ou avec correspondance de forme, aux éléments d'un arrangement de serrage (13, 14).

19. Arrangement selon l'une des revendications précédentes,
**caractérisé en ce que**
dans les éléments de base (GE-X) sont réalisées des percées supplémentaires (9), qui sont réalisées et disposées de façon que chaque élément d'un auxiliaire de positionnement passe par des percées (9) communiquant les unes avec les autres, et qu'ils soient empilés, pressés et/ou reliés et serrés les uns aux autres, avec ajustage serré, avec les éléments d'un auxiliaire de positionnement pour plusieurs cellules électrochimiques.
